# FASCICULE DE BREVET EUROPEEN

(11) **EP 2 015 552 B1**
(45) Date de publication et mention de la délivrance du brevet: **30.03.2016**
(21) Numéro de dépôt: 08290684.3
(22) Date de dépôt: 10.07.2008
(51) Int. Cl.: G08B 21/04, G08B 21/14, G08B 25/01, G08B 25/14, H04M 1/725, H04M 11/04, G08B 29/02

(54) **Procédé et système d'alerte modulaire**
Modulares Alarmsystem und -verfahren
Modular alarm system and method

(30) Priorité: 11.07.2007 FR 0705023
(43) Date de publication de la demande: 14.01.2009
(73) Titulaire: Société Française du Radiotéléphone, 75008 Paris (FR)
(72) Inventeur: Bulian, Fabrice, 77610 Chatres (FR); Teimoorzadeh, Kourosh, 28130 Bouglainval (FR)
(74) Mandataire: Debay, Yves

(56) Documents cités:
- EP-A- 1 388 830
- WO-A-02/09465
- WO-A-2005/072075
- WO-A-2006/018833
- US-A1- 2006 089 542

## Description

Le domaine de la présente invention est celui des télécommunications. Plus particulièrement, il s'agit d'un procédé et d'un système de surveillance et d'alerte destinés à un utilisateur équipé d'un terminal mobile, comme par exemple un téléphone cellulaire, un ordinateur portable ou un appareil électronique embarqué.

Un téléphone portable peut être utilisé comme outil de sécurité, grâce à sa fonction de mobilité associée à sa fonction de télécommunication. Les téléphones portables évolués fournissent plusieurs fonctions permettant d'augmenter l'interactivité et permettent ainsi la transmission de messages sous forme de texte, la transmission de photos ou la transmission de films. En plus du réseau de téléphonie mobile, un téléphone portable est susceptible de communiquer par d'autres réseaux, en utilisant par exemple, l'interface de communication Bluetooth.

Un problème technique est cependant qu'une procédure d'urgence est généralement une procédure précise adaptée à une situation déterminée et est souvent inappropriée à un usage particulier de l'utilisateur. Le téléphone portable se révèle souvent inopérant dans des situations d'urgence face à un agresseur ou lorsque l'utilisateur est soumis à un stress important ou encore lorsque l'utilisateur est physiquement blessé.

Le document de l'art antérieur WO 02/09465 décrit un téléphone mobile, qu'il soit ou non en marche, émet un signal en continu. En l'absence de signal au niveau d'une unité de réception, une alarme se déclenche. Cette unité de réception peut être une centrale d'alarme ou un système Internet.

La présente invention a pour objet de supprimer un ou plusieurs des inconvénients de l'art antérieur en proposant un procédé d'alerte évènementiel évolutif permettant un paramétrage simple d'une ou plusieurs procédures de déclenchement d'alerte.

Cet objectif est atteint grâce à un procédé d'alerte exécuté par une plateforme de sécurité dans un premier réseau, comprenant au moins une première passerelle de communication avec au moins un premier terminal en situation de mobilité, par un second réseau de télécommunication, caractérisé en ce qu'il comprend au moins :
- une étape d'établissement d'une communication entre le premier terminal et la plateforme de sécurité, comprenant l'envoi, par le premier terminal, de données représentatives d'un contexte d'utilisation déterminé comprenant au moins des données représentatives d'au moins un état d'au moins un capteur du premier terminal,
- une étape d'initialisation d'au moins une session d'alerte de la plateforme, initialisée en fonction du contexte d'utilisation, la session d'alerte comprenant au moins un module d'évaluation évaluant au moins une première variable d'alerte associée au premier terminal,
- une étape d'initialisation d'un premier module de surveillance de la plateforme, initialisé en fonction du contexte, le premier module de surveillance réglant la première variable d'alerte évaluée dans un état représentatif de l'état d'un capteur du premier terminal,
- une étape d'initialisation d'au moins un module d'émission d'alerte, associé au contexte, commandé en fonction du module d'évaluation et déclenchant, lors de son activation, au moins l'envoi d'un message d'alerte, par un des réseaux,
- une étape d'activation de la session d'alerte et de son module d'évaluation,
- une étape d'envoi de données de réglage de la première variable d'alerte évaluée, par le premier terminal exécutant un premier programme d'envoi de données,
- une étape d'activation du module d'émission d'alerte lorsque le module d'évaluation détecte un état d'urgence.

Selon une autre particularité, le procédé d'alerte comprend :
- une étape d'établissement d'une communication entre la plateforme de sécurité et au moins un second terminal en situation de mobilité communiquant par un troisième réseau avec une seconde passerelle de la plateforme, cette étape étant concomitante à l'étape d'établissement de la communication entre le premier terminal et la plateforme,
- une étape d'association de la session d'alerte et de son module d'évaluation avec le second terminal, suivant l'étape d'initialisation de la session d'alerte, le module d'évaluation évaluant la première variable d'alerte et au moins une seconde variable d'alerte associée au second terminal,
- une étape d'initialisation d'un second module de surveillance associé au contexte, précédant l'étape d'activation de la session d'alerte et de son module d'évaluation, le second module de surveillance réglant la seconde variable d'alerte évaluée dans un état représentatif de l'état d'un capteur du second terminal,
- une étape d'envoi de données de réglage de la seconde variable d'alerte évaluée, par le second terminal exécutant un second programme d'envoi de données, suivant l'étape d'activation de la session d'alerte et de son module d'évaluation.

Selon une autre particularité, l'étape d'activation du module d'évaluation est suivie d'une étape de transmission, de la plateforme au premier et respectivement au second terminal, du premier et respectivement du second programme d'envoi de données ou d'une mise à jour du premier et respectivement du second programme d'envoi de données.

Selon une autre particularité, l'étape d'établissement de la communication entre le premier terminal et la plateforme de sécurité comprend l'envoi, par le premier terminal, d'une requête de demande de création de la session, comprenant les données représentatives du contexte,
et en ce que l'étape d'initialisation de la session d'alerte et de son module d'évaluation, l'étape d'initialisation du module de surveillance ou l'étape d'initialisation du module d'émission d'alerte est réalisée en fonction d'au moins une des données représentatives du contexte, comparée avec des données d'initialisation associées à des modules d'une bibliothèque.

Selon une autre particularité, la donnée représentative du contexte est une variable d'alerte représentative de l'état d'un des capteurs.

Selon une autre particularité, le procédé d'alerte comprend une étape d'archivage du module d'évaluation, du module de surveillance ou respectivement du module d'émission d'alerte comprenant le stockage de données représentatives du module d'évaluation, du module de surveillance ou respectivement du module d'émission d'alerte, associé à des données représentatives du contexte.

Selon une autre particularité, l'activation de la session est réalisée concomitante au stockage, par un module d'apprentissage, de séquences d'évènements informatiques représentatives des états des modules d'évaluation, de surveillance et d'émission d'alerte, en concordance de phase avec les états des variables d'alerte.

Selon une autre particularité, l'étape d'initialisation d'un des modules d'évaluation, de surveillance ou d'émission d'alerte, est suivie d'une étape de réglage de ce module, en fonction de :
- une requête de paramétrage manuel provenant du premier terminal et entrée par une interface utilisateur du premier terminal, ou
- une requête de paramétrage à distance provenant d'un serveur de paramétrage extérieur à la plateforme,
- une commande de paramétrage automatique produite par le module d'apprentissage.

Selon une autre particularité, la commande de paramétrage automatique est produite par le module d'apprentissage en fonction :
- des séquences d'évènements informatiques examinées par le module d'apprentissage, ou
- d'une annulation de l'état d'urgence entrée par l'interface utilisateur du premier terminal.

Selon une autre particularité, l'étape de réglage du module d'évaluation comprend :
- un choix d'un programme d'évaluation dans une bibliothèque de programmes, ou
- un paramétrage du programme d'évaluation choisi, ou
- une association d'un ou plusieurs modules d'émission d'alerte commandés en fonction de l'évaluation, ou
- un réglage d'une ou plusieurs références de variables d'alerte lues en entrée du programme d'évaluation.

Selon une autre particularité, l'étape de réglage du module de surveillance comprend :
- un réglage d'une référence d'un capteur surveillé, ou
- un choix d'une fonction de traitement préliminaire réglant la variable d'alerte, ou
- un paramétrage de la fonction de traitement préliminaire, ou
- un réglage d'une temporisation de déclenchement d'alerte.

Selon une autre particularité, l'étape de réglage du module d'émission d'alerte comprend :
- un choix d'un type de message d'alerte, ou
- un réglage d'un contenu du message d'alerte, ou
- un réglage d'au moins une référence de variable d'alerte ou de séquence d'évènements informatiques insérée au contenu du message d'alerte envoyé, lors de l'activation du module d'émission d'alerte, ou
- un réglage d'une destination du message d'alerte, ou
- un réglage de paramètres de déblocage ou de sortie d'un état d'alerte.

Selon une autre particularité, l'étape d'activation du module d'évaluation de la session correspondant au contexte, est précédée d'une étape préalable de réglage d'au moins un des modules d'évaluation, de surveillance ou d'émission d'alerte, le réglage étant réalisé automatiquement par le module d'apprentissage ou manuellement par l'interface utilisateur du premier terminal.

Selon une autre particularité, l'étape d'activation du module d'émission d'alerte est suivie d'au moins :
- une étape de désactivation du module d'évaluation de la session correspondant au contexte,
- une étape de réglage automatique du module d'évaluation ou d'un des modules associés au contexte, par le module d'apprentissage,
- une nouvelle étape d'activation du module d'évaluation.

Selon une autre particularité, l'étape de désactivation du module d'évaluation est précédée d'au moins :
- une étape d'envoi d'un message d'avertissement, via l'interface utilisateur du premier terminal,
- une étape d'attente d'une requête d'annulation de l'état d'urgence, entrée par l'interface utilisateur,
- une étape de réception de la requête d'annulation suivie de l'étape de désactivation du module d'évaluation.

Selon une autre particularité, le module d'évaluation exécute au moins :
- une étape de temporisation avant validation de l'état d'urgence, débutant au dépassement d'un seuil paramétrable, par la ou une des variables évaluées, la fin de la temporisation validant l'état d'urgence ou la temporisation s'interrompant dans le cas d'un passage de la variable évaluée en dessous du seuil.

Un second objet de la présente invention est de proposer un système d'alerte évolutif permettant un paramétrage simple d'une ou plusieurs procédures de déclenchement d'alerte.

Cet objectif est atteint grâce à un système d'alerte comprenant une plateforme dans un premier réseau, équipée d'au moins une première passerelle de communication avec au moins un premier terminal en situation de mobilité, par un second réseau de télécommunication, un serveur d'alertes comprenant des moyens de traitement et des moyens de mémorisation agencés de façon à communiquer au moins, via la première passerelle, avec le premier terminal, pour l'émission ou la réception de données,
caractérisé en ce que les moyens de traitement associés aux moyens de mémorisation sont agencés de façon à réaliser au moins :
une session d'alerte, initialisée en fonction d'un contexte d'utilisation comprenant au moins des données représentatives d'au moins un état d'au moins un capteur du premier terminal, la session d'alerte comprenant au moins un module d'évaluation, commandé dans un état actif ou dormant et évaluant au moins une première variable d'alerte associée au premier terminal,
la première variable d'alerte évaluée étant réglée dans un état représentatif d'un capteur du premier terminal, par un premier module de surveillance initialisé en fonction du contexte,
le premier terminal transmettant des données représentatives de l'état du capteur du premier terminal, au premier module de surveillance réglant la première variable d'alerte évaluée, en fonction de ces données transmises,
le module d'évaluation, dans son état actif, commandant l'activation du module d'émission d'alerte si la variable testée est représentative d'un état d'urgence, le module d'émission d'alerte activé déclenchant l'envoi d'au moins un message d'alerte, par un des réseaux.

Selon une autre particularité, le système d'alerte comprend une seconde passerelle de communication avec au moins un second terminal en situation de mobilité, par un troisième réseau de communication,
le module d'évaluation évaluant la première variable d'alerte et au moins une seconde variable d'alerte associée au second terminal,
la seconde variable d'alerte évaluée étant réglée dans un état représentatif d'un capteur du second terminal, par un second module de surveillance associé au contexte,
le second terminal transmettant des données représentatives de l'état du capteur du second terminal, au second module de surveillance réglant la seconde variable d'alerte évaluée, en fonction de ces données transmises.

Selon une autre particularité, la session d'alerte commande le réglage d'un module d'apprentissage qui mémorise des séquences d'évènements informatiques représentatives des états des modules de surveillance, d'évaluation et d'émission d'alerte, en concordance de phase avec les états des variables d'alerte.

Selon une autre particularité, le module d'évaluation ou un des modules associés au contexte est réglé, lorsque le module d'évaluation est dans son état dormant, par :
- une requête de paramétrage manuel, provenant d'une interface utilisateur du premier terminal, ou
- une commande de paramétrage automatique produite par le module d'apprentissage, ou
- une requête de paramétrage à distance provenant d'un serveur de paramétrage extérieur à la plateforme.

Selon une autre particularité, le système d'alerte comprend une bibliothèque de modules d'évaluation, de surveillance ou d'émission d'alerte dédiés des activités déterminées, la bibliothèque étant enrichie par des modules d'évaluation, de surveillance ou d'émission d'alerte sauvegardés chacun avec au moins une donnée d'initialisation représentative du contexte d'utilisation lors de la sauvegarde.

Selon une autre particularité, la donnée d'initialisation représentative du contexte d'utilisation lors de la sauvegarde est une variable d'alerte.

Selon une autre particularité, le serveur d'alertes, comprenant au moins une session d'alerte supplémentaire, communique avec un serveur central commandant un réglage de chaque session en fonction d'un résultat d'un examen des séquences d'évènements informatiques stockées par chaque module d'apprentissage.

Selon une autre particularité, la session comprend une pluralité de modules d'évaluation, correspondant chacun à un scénario d'évaluation et associés chacun à au moins un module de surveillance d'au moins une variable d'alerte évaluée et à au moins un module d'émission d'alerte.

L'invention, ses caractéristiques et ses avantages apparaîtront plus clairement à la lecture de la description faite en référence aux figures ci-dessous référencées et données à titre d'exemples non limitatifs :
- la figure 1 représente un exemple de configuration d'une plateforme selon l'invention ;
- la figure 2 représente un exemple d'architecture d'un système selon l'invention ;

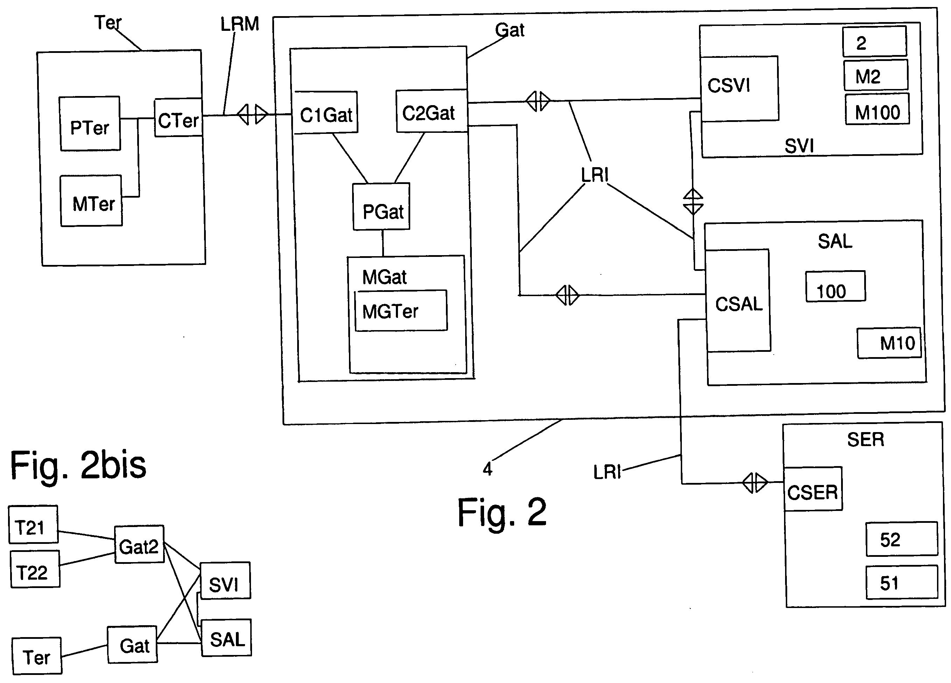

- la figure 2bis représente un exemple d'architecture d'un système comprenant plusieurs terminaux selon l'invention ;

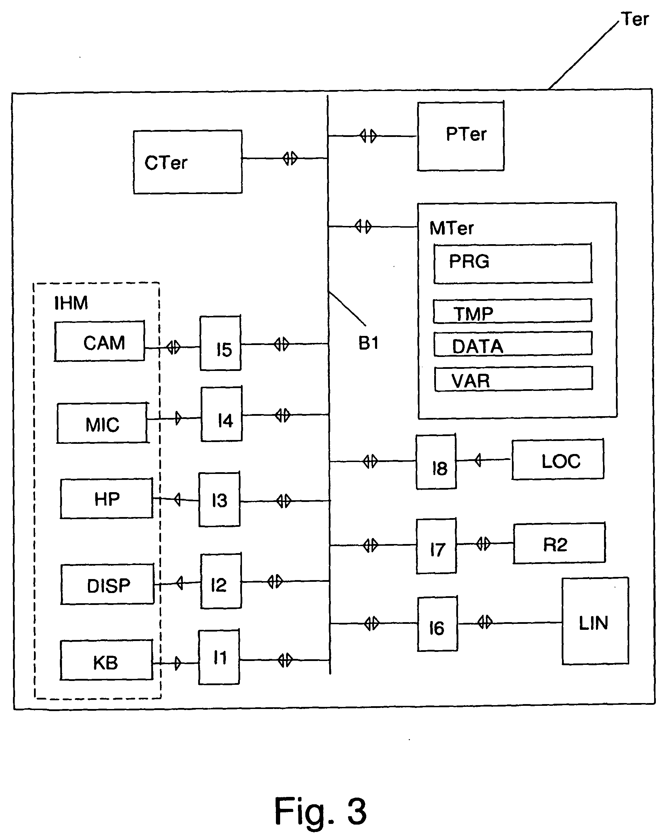

- la figure 3 représente un exemple d'architecture d'un terminal mobile ;

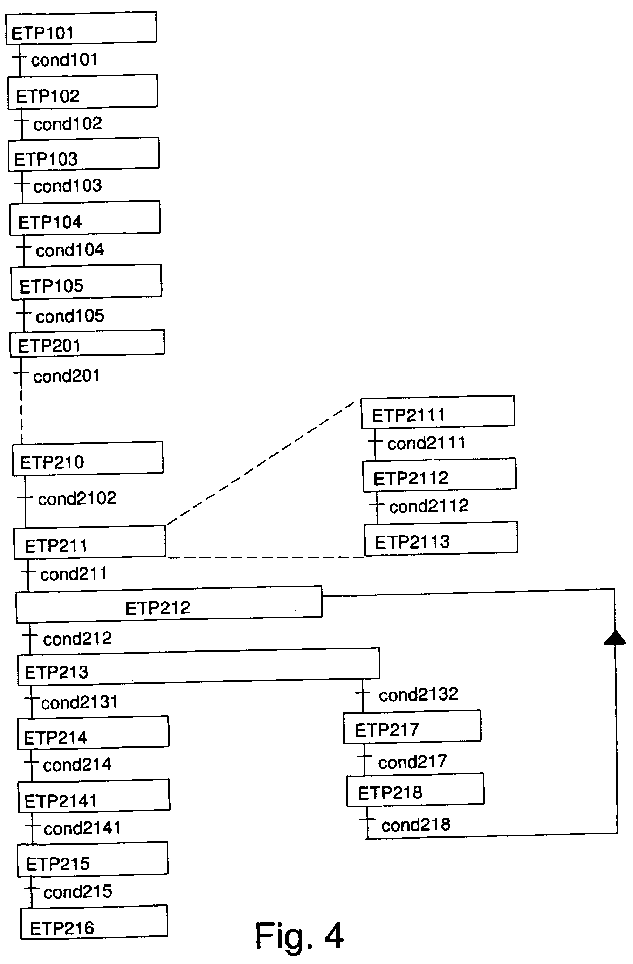

- la figure 4 est un diagramme représentant un exemple de procédé de configuration et de déclenchement d'une alarme selon l'invention ;

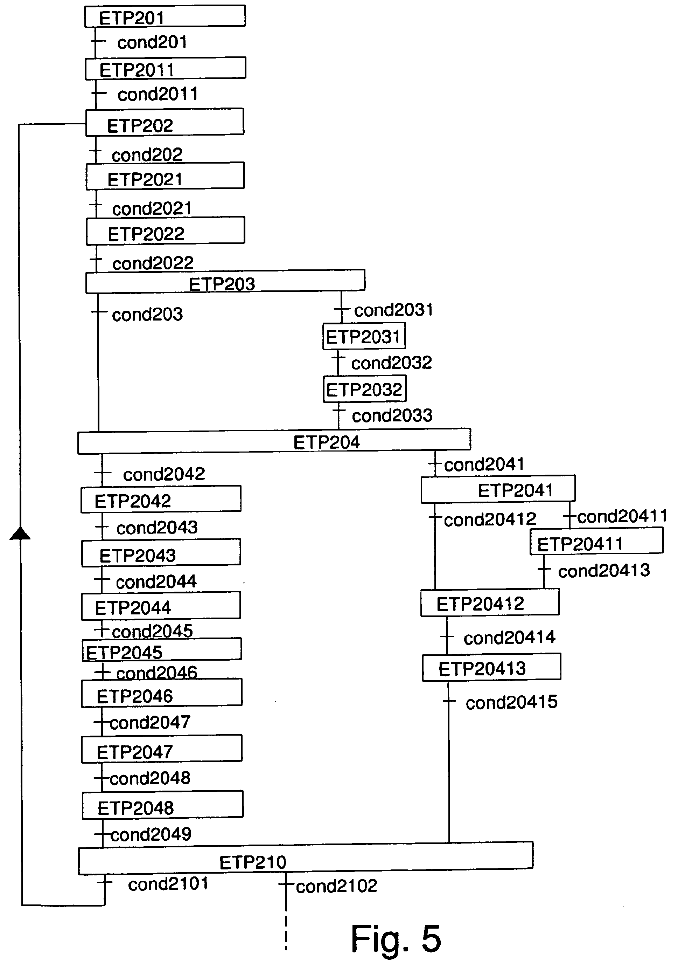

- la figure 5 est un diagramme représentant un exemple de procédé de paramétrage d'alerte destinée à être envoyée selon l'invention ;

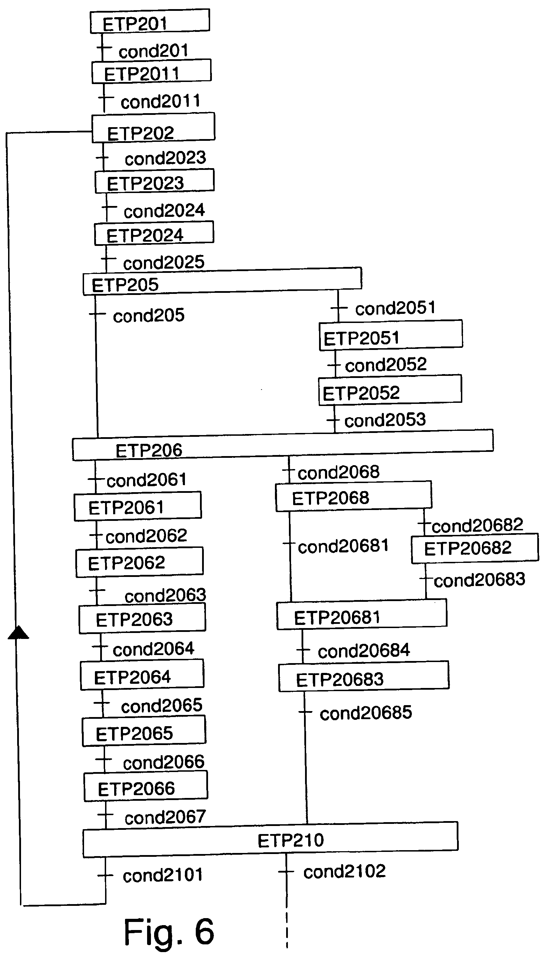

- la figure 6 est un diagramme représentant un exemple de procédé de paramétrage de surveillance d'une situation selon l'invention ;

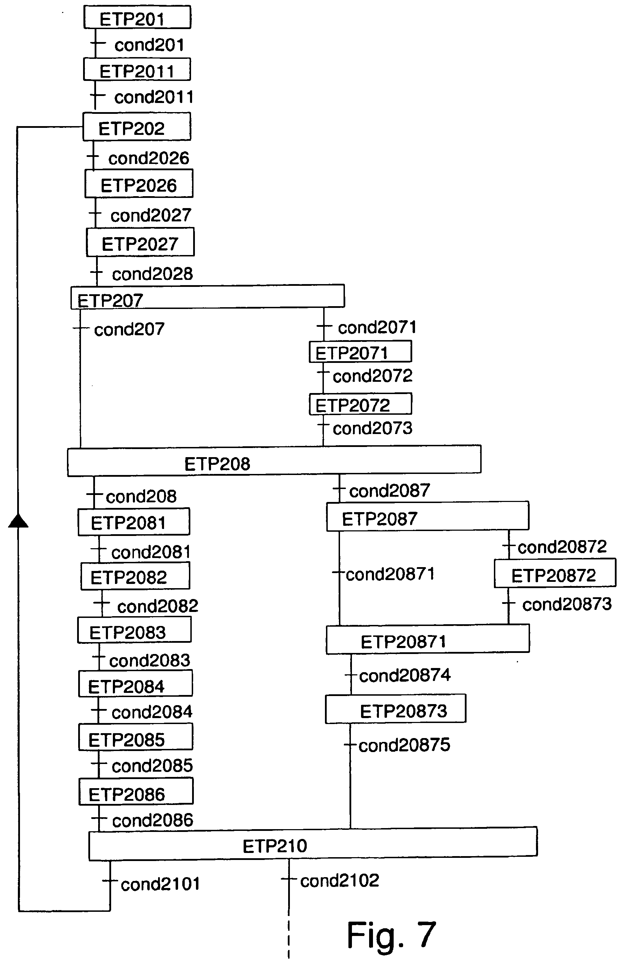

- la figure 7 est un diagramme représentant un exemple de procédé de paramétrage d'évaluation d'une situation selon l'invention.

L'invention va à présent être décrite en référence aux figures précédemment citées. Un exemple de structure d'un terminal mobile interagissant avec l'utilisateur, sera décrit par la suite.

Pour réaliser une analyse et une surveillance de la situation, le terminal (Ter) mobile est, par exemple en communication avec une plateforme (4) paramétrable de sécurité. La plateforme est adaptée pour être en communication avec un ou plusieurs terminaux. Une surveillance pour déclencher éventuellement une alerte, exécutée par la plateforme, comprendra, par exemple, la vérification de la présence d'un terminal détecté sur un réseau.

Une surveillance sera, par exemple, le traitement d'un ensemble de données provenant de différents terminaux connectés, par exemple, par des réseaux différents. La plateforme détectant un état d'urgence, par ce traitement, déclenche, par exemple, une procédure d'urgence influant sur chacun des terminaux ou sur des serveurs gérant des messages d'alerte. La plateforme communiquant, par exemple, avec une flotte de terminaux, élargit son champ d'expérience et développe une intelligence collective.

Un exemple de structure de plateforme va maintenant être décrit. La plateforme de sécurité (4), comme représenté à la figure 2, comprend, de manière non limitative, une passerelle (Gat) communiquant avec un serveur (SVI) d'applicatifs et un serveur (SAL) d'alertes. De manière non limitative, les serveurs et la passerelle comprennent des objets logiciels ou des modules informatiques ou des composants électroniques de type hardware interagissant entre eux. Comme représenté à la figure 2bis, la plateforme peut être équipée d'une pluralité de passerelles (Gat, Gat2) reliées chacune avec un réseau distinct et communiquant avec un ou plusieurs terminaux (Ter, T21, T22) de ces réseaux. De cette façon, la centralisation des informations ou des données représentatives d'évènements est optimisée.

La passerelle (Gat) comprend des premiers moyens (C1Gat) de communication reliés, par exemple, à un réseau de téléphone mobile et une liaison (LRM) de communication avec le terminal (Ter) mobile, en utilisant, par exemple, un flux standard pour la transmission de données. Une station d'émission et de réception réalise un noeud de traitement et est reliée par exemple avec la passerelle (Gat) pour établir la liaison (LRM) entre le terminal (Ter) mobile et la passerelle (Gat).

Selon un autre exemple, les premiers moyens de communication sont en liaison avec un réseau de radio télécommunication local sans fils, par exemple du type Wi-Fi.

La passerelle (Gat) comprend, d'autre part des seconds moyens (C2Gat) de communication reliés, par exemple, au réseau Internet ou à un réseau local. Les seconds moyens (C2Gat) de communication de la passerelle (Gat) comprennent, par exemple, une interface matérielle pilotée par une interface logicielle pour envoyer et recevoir des données, par exemple sur le réseau Internet. Un protocole de communication de type voix sur IP, également appelé VoIP, est par exemple utilisé entre la passerelle et le serveur (SVI) d'applicatifs. Un autre protocole de communication standard est, par exemple, utilisé entre la passerelle (Gat) et le serveur (SAL) d'alertes. La passerelle (Gat) comprend des moyens (PGat) de traitement, comme par exemple un système d'exploitation temps réel, associés à des moyens (MGat) de mémorisation, en liaison avec ses moyens (C1 Gat, C2Gat) de communication. Le stockage de données ou de librairies dans la passerelle (Gat) est, par exemple, réalisé dans des mémoires volatiles de type RAM (Random Access Memory) ou des mémoires non volatiles comme des disques durs. L'établissement de la communication entre le terminal (Ter) mobile et la plateforme (4) de sécurité qui sera détaillé par la suite, débute par exemple par l'envoi (ETP101) d'une requête d'initialisation de la communication, par le terminal (Ter) mobile, à la passerelle (Gat). Un objet applicatif (2) de sécurité, supporté par le serveur (SVI) d'applicatifs, et une session (100) d'alerte, supportée par le serveur (SAL) d'alertes, sont, par exemple, associés au terminal (Ter) mobile.

Les moyens de communication du serveur (SAL ou SVI) d'alertes, ou d'applicatifs, comprennent, par exemple, une interface logicielle associée à un composant matériel pour réaliser l'envoi de requêtes et l'orientation des requêtes reçues. Un protocole de communication propriétaire, est par exemple utilisé entre le serveur (SVI) d'applicatifs et le serveur (SAL) d'alertes, établissant, par exemple, des liaisons (LRI) de type réseau.

Le serveur (Ser) de sécurité est par exemple, mis en place par une entreprise de service aux utilisateurs de terminaux mobiles. Le serveur de sécurité (Ser) est, par exemple, un serveur de type HTTP présent sur le réseau Internet. Une communication entre le serveur (SAL) d'alertes et le serveur (Ser) de sécurité est, par exemple, réalisée en utilisant un protocole d'échange de données, comme par exemple HTTP (Hyper Text Transfer Protocol). Le serveur (Ser) de sécurité comprend des moyens de traitement associés à des moyens de mémorisation permettant au serveur de sécurité d'exécuter des programmes résidant en mémoire, par exemple pour envoyer et recevoir des données par ses moyens (CSer) de communication et pour traiter les données. Le serveur (Ser) de sécurité comprend, par exemple, un ou plusieurs objets (51, 52) communiquant, par ses moyens (CSer) de communication, avec des objets accédés par des liaisons (LRI) Internet.

Selon un exemple de réalisation, le serveur (Ser) de sécurité exécute une procédure d'urgence, après le déclenchement d'une alerte. Le déclenchement d'une alerte est par exemple, associé à l'envoi de courriers électroniques ou à l'envoi de requêtes vers d'autres serveurs du réseau.

Selon un exemple de réalisation, le serveur (Ser) de sécurité sert d'intermédiaire entre un terminal du réseau Internet et le serveur d'alertes. Des données surveillées, provenant par exemple de ce terminal (Ter) mobile sont, par exemple, retransmises au serveur (SAL) d'alertes, pour que ces données soient traitées par la session d'alerte.

Selon un exemple de réalisation, un objet logiciel (51) du serveur de sécurité réalise un examen de toutes les données collectées par le serveur (SAL) d'alertes, comme par exemple des données propres à l'utilisateur du terminal mobile. Ces données sont, par exemple, enregistrées et classées, puis sont ensuite traitées pour réaliser des statistiques ou une analyse déterminée.

Selon un exemple de réalisation, le serveur (Ser) de sécurité comprend un objet logiciel ou un programme exécuté pour envoyer des requêtes de configuration de la plateforme. La configuration de la plateforme (4) est réalisée, par exemple, selon des modes de surveillance déterminés en accord avec les souhaits de l'utilisateur du terminal (Ter) mobile. De manière non limitative, l'utilisateur souscrit, par exemple, un contrat de sécurité précisant des modes de surveillance déterminés ou l'utilisateur peut accéder à un site Internet pour entrer des paramètres de sécurité, pour initialiser ou modifier des modes de surveillance.

La plateforme (4) de sécurité sera configurée, de manière non limitative, par l'objet (52) logiciel du serveur (Ser) de sécurité ou le terminal (Ter) mobile piloté via son interface (IHM) utilisateur. Le paramétrage, par exemple, des critères, des seuils ou des pondérations pour des surveillances, des évaluations de situations à risques ou des procédures d'urgence exécutées, permet à l'utilisateur d'avoir un système de sécurité personnalisé et efficace dans de nombreuses circonstances.

De manière non limitative, des requêtes, envoyées par le terminal (Ter) mobile, peuvent être envoyées de la même façon par le serveur (Ser) de sécurité. Le serveur de sécurité peut aussi réinitialiser, en une seule opération, la configuration complète de la plateforme (4).

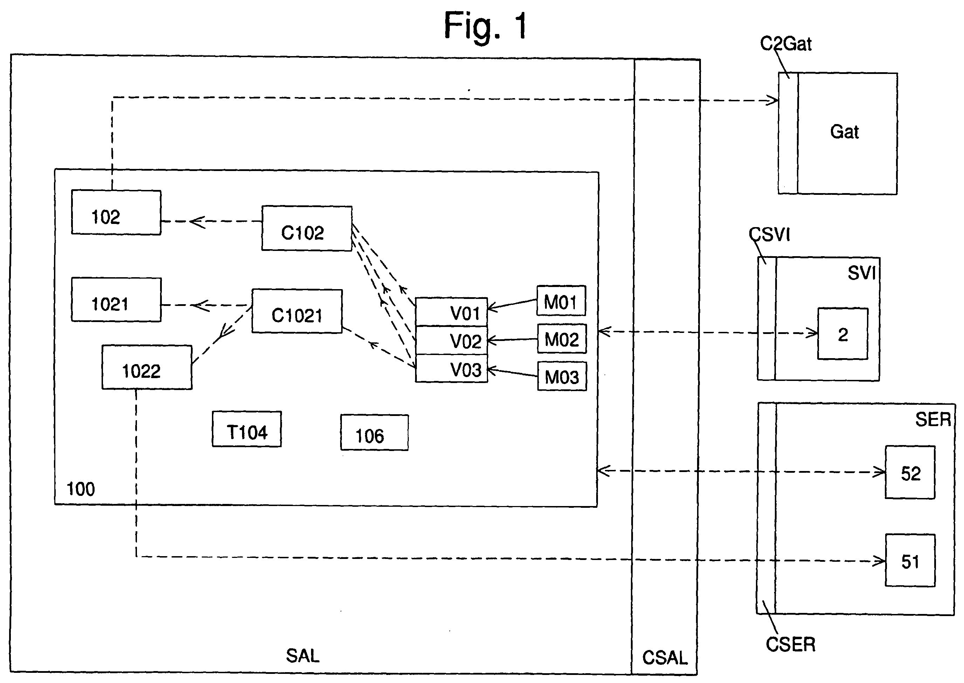

Un exemple non limitatif de configuration de la plateforme, représenté à la figure 1, va maintenant être décrit. Le serveur (SAL) d'alertes comprend, par exemple, un objet (100) logiciel de session d'alerte qui comprend des objets (C102, C1021) d'évaluation, des objets (M01, M02, M03) de surveillance pour recevoir des données, par exemple représentatives d'états de capteurs, et des objets (102, 1021, 1022) d'alerte, par exemple pour envoyer des requêtes ou des messages d'alerte. Une session (100) est, par exemple, appelée par un serveur de sécurité ou par un terminal (Ter) via la passerelle (Gat), pour la réception de données à évaluer ou de requêtes de configuration. De manière non limitative, les objets d'évaluation comprennent un attribut représentatif de leur état activé ou désactivé. Un objet d'évaluation, par exemple, dans un état activé, réalisera une acquisition ou une réception de données pour réaliser une évaluation du risque d'urgence et déclencher l'envoi de messages d'alerte en fonction de cette évaluation. De manière non limitative, les modules d'évaluation d'une session, dans un état désactivé, pourront être paramétrés par le terminal mobile (Ter), via la passerelle (Gat), ou par un objet (52) logiciel du serveur (Ser) de sécurité. De plus la session comprend un objet (106) d'apprentissage qui, par exemple, réalise automatiquement le paramétrage d'objets inactifs de la session.

Une bibliothèque de classes d'objets sera par exemple, stockée en mémoire du serveur (SAL) d'alerte. La bibliothèque comprendra, par exemple, différents objets d'évaluation, de surveillance ou d'émission d'alerte, comme par exemple, des objets dédiés à un usage déterminé. Cet usage est par exemple, le tourisme ou le journalisme, les objets de la bibliothèque, après initialisation permettant une assistance sur place.

Un objet d'évaluation sera, par exemple, structuré autour d'un ou plusieurs programmes de calcul et d'évaluation recevant des données d'entrée et fournissant des données de sortie. Des programmes d'évaluation pourront s'exécuter de façon autonome ou interagir entre eux. De manière non limitative, un objet logiciel sera initialisé par des paramètres d'initialisation représentatifs d'un nom de sa classe d'objet ou d'un contexte d'utilisation du terminal. Le contexte d'utilisation du terminal correspondra par exemple, à l'ensemble de données produites par les capteurs à un instant déterminé. Le nombre et le type des capteurs sont, par exemple, pris en compte lors de l'initialisation. Un état d'un ou plusieurs capteurs peut aussi être pris en compte.

De manière non limitative, plusieurs instances d'objet de session sont supportées par le serveur (SAL) d'alertes, chacune correspondant à un contexte d'utilisation déterminé. Une session comprend, par exemple, un ou plusieurs objets logiciels (C102, C1021) d'évaluation. Un objet (C102) d'évaluation reçoit, par exemple, des informations produites par un ou plusieurs objets logiciels (M01, M02, M03) de surveillance, pour analyser une situation selon un ou plusieurs critères. Un objet (M01, M02, M03) de surveillance règle, par exemple, une variable (V01, V02, V03) d'alerte de la session (100) d'alerte. La ou les variables (V01, V02, V03) d'alerte réglées sont, par exemple, dans un état représentatif ou non d'un état d'urgence. Une variable d'alerte est, par exemple, une variable binaire ou une variable représentative d'un entier ou d'un réel ou un tableau d'entiers ou de réels. Ces variables (V01, V02, V03) réglées par les objets (M01, M02, M03) de surveillance, sont par exemple, utilisées comme entrée d'une fonction évaluant un niveau d'alerte. Un objet (M01) de surveillance reçoit, par exemple, par l'objet (2) applicatif, des données représentatives de l'état d'un capteur du terminal (Ter) mobile ou un capteur relié au Terminal mobile.

De manière non limitative, le terminal (Ter) mobile sous surveillance, comprend un programme de coopération avec la plateforme comprenant, par exemple :
- un mode d'envoi de requête de paramétrage de la plateforme (4) de sécurité,
- une commande interactive d'activation d'une évaluation,
- un mode d'envoi de données représentatives d'évènements à surveiller,
- une commande interactive de désactivation de la surveillance.

Un objet (M01, M02, M03) de surveillance lie ou traite les données numériques représentatives, par exemple, de l'état d'un capteur, pour régler une variable d'alerte associée. De manière non limitative, une requête est adressée automatiquement par un terminal (Ter), à la session (100) d'alerte ou directement à l'objet (M01) de surveillance. Ainsi plusieurs objets de surveillance sont susceptibles de traiter des données provenant de terminaux différents et prises en compte dans une même évaluation ou dans différentes évaluations en parallèle.

Selon un exemple non limitatif, un module (M03) de surveillance réalise un comptage de temporisation, le comptage étant réinitialisé pour toute réception d'une requête envoyée par le terminal (Ter) mobile. La fin de la temporisation correspond, par exemple, à une erreur de communication ou à une plage temporelle durant laquelle le terminal devrait, selon une très forte probabilité, envoyer au moins une requête. Le terminal (Ter) exécute, par exemple, un programme d'envoi cyclique de requêtes pour détecter une anomalie, due par exemple, à la destruction du terminal mobile. Le module (M03) de surveillance règle, par exemple, une variable d'alerte associée, dans un état d'urgence, si aucun signal n'est détecté à la fin de la temporisation. Ainsi la plateforme comprend une variable dont l'état est susceptible d'indiquer une destruction ou un arrêt forcé du terminal, réalisé par un agresseur ou un passage du terminal hors de la couverture du réseau, également appelé décrochage du réseau. La session peut alors déclencher une procédure d'urgence.

De manière non limitative, un module de surveillance réalise un traitement des requêtes provenant du terminal (Ter) pour déterminer par triangulation la position du terminal (Ter) par rapport au réseau cellulaire. Le module de surveillance règle, par exemple, une variable d'alerte associée, à une valeur représentative de la position du terminal dans le réseau cellulaire. Cette information de localisation géographique peut ainsi être analysée pour le déclenchement d'une alerte ou l'information est par exemple stockée pour être transmise en cas d'alerte. Pour analyser finement une situation selon un ou plusieurs scénarii, la session (100) d'alerte comprend, par exemple, un ou plusieurs objets (C102) logiciels d'évaluation du niveau d'alerte, ces objets d'évaluation étant paramétrables. Un objet (C102) d'évaluation comprend, par exemple, un programme d'évaluation dont la ou les entrées sont, par exemple, des variables (V01, V02, V03) d'alertes accédées par des pointeurs de l'objet (C102) d'évaluation. L'objet (C102) d'évaluation traite ainsi les variables (V01, V02, V03) d'alerte selon un scénario déterminé, pour déclencher, en cas d'urgence, l'envoi d'un ou plusieurs messages d'alerte. Différents niveaux d'urgence ou différentes situations d'urgence sont programmables pour déclencher des procédures d'urgence associées. La session (100) d'alerte comprend, par exemple, un ou plusieurs objets (102, 1021, 1022) d'alerte commandés chacun dans un état désactivé ou activé. Un objet (C102) d'évaluation commande, par exemple, un objet (102) d'alerte associé, dans un état désactivé, par défaut, et dans un état activé, lorsque son programme d'évaluation détecte un état d'urgence, en fonction de ses variables d'alerte associées.

Un objet (102) d'alerte est, par exemple, associé à un message de type déterminé, ce message étant envoyé, par exemple, vers l'adresse réseau du terminal, contenue dans la passerelle (Gat) ou vers un objet (51) logiciel du serveur (Ser) de sécurité. Plusieurs destinations peuvent être paramétrées, le passage d'un réseau à un autre étant par exemple réalisé par une passerelle. Un message d'urgence de type vocal ou texte peut, par exemple, être envoyé vers un autre terminal mobile du même réseau ou d'un autre réseau. De manière non limitative, le contenu d'un message est paramétré à l'avance ou enrichi au moment de l'activation de l'alerte, pour être envoyé vers une ou plusieurs destinations paramétrées et mémorisées dans l'objet d'alerte.

Un terminal pourra fonctionner selon plusieurs modes comme par exemple :
- un mode d'assistance en cas d'urgence où la plateforme centrale gère les signaux représentatifs du contexte d'utilisation produits par le terminal, pour déclencher ou non un mode d'urgence du terminal ;
- un mode informatif où un premier terminal transmet des signaux informatifs produits, vers la plateforme centrale qui utilise ces signaux, par exemple avec d'autres signaux, pour commander ou non un état d'urgence d'un deuxième terminal ;
- un mode de surveillance d'une flotte de terminaux où chaque terminal est susceptible de déclencher une alerte pour toute la flotte et où l'expérience de toute la flotte est capitalisée par la plateforme centrale pour une adaptation automatique de la plateforme centrale et de l'ensemble de la flotte.

Ainsi des variables (V01, V02), par exemple, représentatives de l'état de capteurs en communication avec le terminal mobile, sont analysées par un objet (C102) d'évaluation. Les capteurs de déclenchement d'alerte sont, par exemple, des capteurs biométriques se mettant dans un état d'alerte si les paramètres relevés sont anormaux ou témoignent d'un état de faiblesse de l'utilisateur. L'objet (C102) d'évaluation active, par exemple, un objet (102) d'alerte, si l'exécution de son programme d'évaluation détermine que les variables testées sont représentatives d'un état d'urgence. L'objet (102) d'alerte activé réalise, par exemple, l'envoi d'un message d'urgence, de type texte, adressé à un bureau de surveillance ou à un service hospitalier, contenant un identifiant de l'utilisateur et la position géographique relevée par un dispositif de localisation de type GPS (Global Positioning System). Le message est par exemple, enrichi avec les données biométriques contrôlées.

De manière non limitative, la plateforme (4) de sécurité peut être configurée pour réaliser, en plus de l'analyse de paramètres biologiques, l'envoi des données mesurées vers un serveur réalisant des analyses statistiques. L'objet (106) d'apprentissage réalise, par exemple, l'enregistrement de séquences d'évènements informatiques représentatives de l'état des objets de surveillance, d'évaluation et d'alerte, en concordance de phase avec les variables d'alerte. Ces séquences sont par exemple, transmises à un objet d'analyse statistique supporté par le serveur (Ser) de sécurité. Un terminal mobile communiquant avec de nombreux capteurs réalise ainsi une centrale de mesure ambulatoire. De plus l'examen du comportement de l'utilisateur permet d'adapter l'analyse de surveillance et d'alerte au cas par cas. Le serveur réalisant des statistiques sur de nombreux patients permet, en cas d'accident non prévu par le système de surveillance, de corriger le programme d'évaluation des objets de chaque plateforme de surveillance. Un ensemble de plateformes (4) de sécurité réalisant chacune la surveillance d'un terminal (Ter) et communiquant toutes avec un serveur central de statistiques, permet ainsi une correction et une amélioration des paramètres de surveillance.

Les objets d'évaluation de la session (100) d'alerte ne sont pas nécessairement actifs en permanence, mais peuvent être activés, par exemple, dans une situation de risque potentiel. De manière non limitative, une ou plusieurs évaluations sont activées par l'utilisateur via une interface homme machine, ou sont activées par un serveur du réseau.

De manière non limitative, la configuration des objets d'une session est autorisée lorsque ces objets sont inactifs. L'état activé ou désactivé d'une évaluation est, par exemple, commandé par une interface (IHM) utilisateur, les commandes étant transmises du terminal à la passerelle (Gat) puis à l'instance d'objet session. De manière non limitative, l'objet session configuré reçoit des commandes de paramétrages par l'objet (2) applicatif, provenant de la passerelle (Gat). La session (100) adresse, par exemple, des réponses représentatives de son état, directement à la passerelle (Gat). Les réponses représentatives de l'état de la session, sont par exemple, transmises au terminal (ter) mobile et traitées par les moyens (PTer) de traitement du terminal, de façon à afficher, de manière non limitative, à l'écran des informations représentatives de l'état de la session, comme par exemple, des images de schémas ou de graphes ou des vidéos. D'autres moyens de l'interface (IHM) homme machine, peuvent être utilisés pour produire des signaux sonores ou des éclairages de voyants pour signifier à l'utilisateur l'état de la session et de ses objets d'évaluation. Un voyant déterminé est par exemple, allumé pour signifier un état désactivé et paramétrable d'objets d'évaluation de la session ou éteint sinon. D'autre part, la session (100) d'alerte peut être paramétrée automatiquement par son objet (106) d'apprentissage. De manière non limitative, la fonction d'examen de l'objet (106) d'apprentissage est activée par l'utilisateur, via l'interface (IHM) utilisateur, par un serveur Internet ou automatiquement de façon périodique.

De manière non limitative, l'objet (106) d'apprentissage comprend ses propres programmes d'adaptation déterminant les réglages des objets de la session, ou les réglages à effectuer par l'objet d'apprentissage résultant d'un dialogue avec un système expert extérieur.

L'utilisateur peut bloquer l'autoévaluation, lorsque l'évaluation s'est révélée suffisamment fiable. Le blocage permet de réaliser une évaluation déterminée connue à l'avance. L'utilisateur bloque, par exemple, l'objet d'apprentissage, via l'interface (IHM) homme machine.

Les objets d'évaluation de la session communiquant avec un serveur de sécurité, peuvent aussi être activés ou désactivés ou paramétrés par un objet logiciel d'un serveur (Ser) du réseau. Un serveur commande par exemple, les objets d'évaluation correspondant à un contexte dans un état désactivé pour ensuite paramétrer les objets correspondant à ce contexte. De cette façon une entreprise de sécurité pourra paramétrer des sessions (100) d'alerte pour ses clients, en fonction de leurs besoins et de leurs demandes. La société pourra aussi activer des évaluations de la session de surveillance à distance, l'activation étant alors automatique du point de vue de l'utilisateur du terminal.

Les paramètres d'une session opérationnelle peuvent avantageusement être réajustés ou la session peut être complétée ou enrichie, les commandes de modification étant réalisées par un utilisateur utilisant l'interface (IHM) homme machine du terminal (Ter) ou par un objet (52) logiciel d'un serveur (Ser) du réseau ou par l'objet d'apprentissage. L'amélioration d'une session repose par exemple sur un procédé d'évolution basé sur :
- la réception et le suivi des notifications d'alertes en provenance des dispositifs portables d'alerte,
- la gestion des alertes en fonction du contexte correspondant dans lequel se trouve le terminal mobile,
- le téléchargement à la demande ou selon le contexte, de modules experts dédiés à une activité déterminée, également appelés modules « métier », dans la plateforme de sécurité ou dans les terminaux mobiles d'alerte,
- l'activation de modes de fonctionnement de la plateforme ou de modes de surveillance des terminaux mobiles, en fonction du contexte évalué, par exemple, par l'état de capteurs des terminaux analysés par un système central d'expertise.

Des modules d'évaluation associés à des modules de surveillance de paramètres biométriques sont, par exemple, activés par un utilisateur devant parcourir seul une région escarpée où un accident pourrait survenir. D'autre part, lorsque les objets d'évaluation de la session sont désactivés, l'utilisateur peut débrancher les capteurs biométriques.

Selon un exemple d'application, dans un groupe d'individus exerçant une activité à risque, chaque individu est équipé d'un terminal (Ter) mobile communiquant avec une session (100) d'alerte distincte, un état d'alerte dans une des sessions (100) d'alerte est, par exemple, détecté par un objet (52) logiciel d'un serveur du réseau, cet objet activant alors automatiquement cette alerte dans toutes les sessions (100) d'alerte pour sécuriser l'ensemble du groupe. De façon avantageuse, un risque couru par un individu permet de prévenir les risques pour le reste du groupe et permet de mettre en alerte l'ensemble du groupe. La session (100), initialement à l'état d'urgence, est par exemple positionnée par le terminal (Ter) de l'individu, par exemple par une commande de l'individu ou par l'évaluation automatique de paramètres provenant de capteurs.

De manière non limitative, une évaluation d'une session (100) d'alerte peut être activée, par un enfant, lors d'un trajet entre son école et son logement. L'enfant accède, par exemple, par un menu affiché à l'écran (DISP) à la commande d'activation de l'évaluation. La session (100) d'alerte est, par exemple, associée à l'activation d'un bouton d'alerte, activé en cas de danger, ou à un chronomètre de la session (100) déclenchant une alerte si le temps de parcours dépasse une durée maximum déterminée. Un message texte, de type SMS, est par exemple envoyé, par un objet d'alerte (102) activé, aux parents de l'enfant, afin de permettre aux parents de réagir immédiatement. L'objet (102) d'alerte adresse, par exemple, un message vers la passerelle (Gat) comprenant le numéro de téléphone d'un ou de plusieurs parents, dans un champ de destination.

Pour le paramétrage d'alertes, l'utilisateur réalise, par exemple, par l'interface (IHM) homme machine, une demande (ETP201) de paramétrage d'une session (100) d'alerte déterminée. Pour adapter la session (100) d'alerte à des situations nombreuses et variées, lorsque les objets d'évaluation d'une session (100) d'alerte sont dans son état désactivé ou dormant, des requêtes de paramétrage, créées via l'interface (IHM) utilisateur du terminal ou par un objet (52) logiciel d'un serveur (Ser), permettent de régler de nombreux paramètres concernant, par exemple, un objet (C102, C1021) d'évaluation ou un objet (M01, M02, M03) de surveillance ou un objet (102) d'alerte. De manière non limitative une session (100) d'alerte comprend un tableau (T104) de pointeurs vers des objets logiciels associés pour permettre à un utilisateur d'accéder à une session (100) d'alerte et aux objets d'alerte, d'évaluation ou de surveillance associés.

Différentes données représentatives de l'état de plusieurs capteurs, envoyées par le terminal (Ter) mobile vers la session (100) d'alerte, peuvent ainsi être sélectionnées et interprétées selon plusieurs scénarii possibles, afin de déclencher plusieurs alertes possibles. Un ou plusieurs objets (C102, C1021) d'évaluation permettent ainsi d'interpréter une situation complexe. De manière non limitative, l'ensemble des données représentatives de l'état des capteurs communiquant avec le terminal (Ter), est envoyé dans un espace de stockage de la session, géré par exemple par l'objet (106) d'apprentissage, les objets (M01, M02, M03) de surveillance pointant vers cet espace de stockage. Ces enregistrements peuvent être transmis par la suite, à un système d'expertise pour être analysés et éventuellement déclencher des commandes de configuration de la session.

La figure 4 représente un exemple non limitatif d'étapes pour réaliser une surveillance personnalisée ou paramétrée, assurant la sécurité d'un utilisateur d'un terminal (Ter) mobile. Une communication entre le terminal (Ter) mobile et une session (100) d'alerte est réalisée via la passerelle (Gat). Un objet (2) applicatif du serveur (SVI) d'applicatifs fournit par exemple des données représentatives des données envoyées par le terminal, à la session supportée par un serveur (SAL) d'alertes.

Selon un exemple non limitatif, l'établissement de communication entre le terminal (Ter) mobile et la plateforme (4) de sécurité comprend une étape (ETP101) d'envoi d'une requête d'initialisation de la communication, par le terminal (Ter) mobile, à la passerelle (Gat). Cette requête est envoyée, de manière non limitative, automatiquement ou en réponse à une commande entrée par l'utilisateur via l'interface (IHM) homme machine du terminal (Ter) mobile.

Les données, émises par le terminal (Ter) mobile, sous la forme d'un signal hertzien, sont reçues par une station d'émission et de réception du réseau mobile. La station d'émission et de réception transforme ce signal hertzien en données numérisées, par des moyens de réception, et des moyens de traitement et de stockage de la station réalisent un stockage de ces données. Les moyens de traitement déterminent ensuite le destinataire du message émis et retransmettent ce message sous la forme d'un signal électrique, ou respectivement optique, par une liaison électrique, ou respectivement optique, à la passerelle (Gat) de la plateforme (4).

Les requêtes provenant du terminal (Ter) mobile, sont reçues par les premiers moyens (C1Gat) de communication de la passerelle (Gat), auxquels la passerelle (Gat) envoie des réponses par ces premiers moyens de communication. Le terminal (Ter) mobile est, par exemple, identifié par la passerelle (Gat) au moyen des données envoyées par celui-ci. De manière non limitative, la passerelle (Gat), par exemple du type PSTN (Public Switched Telephone Network ou réseau téléphonique commuté) communique avec le terminal (Ter) mobile en utilisant un réseau de type RNIS (Réseau Numérique à Intégration de Services), également appelé ISDN (Integrated Services Digital Network), ou en utilisant un réseau du type ISUP (ISDN User Part), et identifie le terminal (Ter) par des moyens d'identification comprenant le numéro d'appelant du terminal. Selon un autre exemple de réalisation, les moyens d'identification comprennent par exemple la carte SIM (Subscriber Identity Module), du terminal, contenant l'identifiant de l'abonné, également désigné par IMSI (International Mobile Subscriber Identity) et l'ensemble des caractéristiques principales de l'abonnement. Le terminal mobile (T) comprend aussi un code d'identité du terminal mobile, également désigné par IMEI (International Mobile Equipement Identity).

Après la réception (cond101) par la passerelle (Gat), des données émises, par exemple sous la forme d'une requête du terminal (Ter), lors d'une étape (ETP102) suivante, la passerelle (Gat) enregistre, dans un espace mémoire (MGTer) de stockage, un identifiant du terminal (Ter) associé à au moins une adresse IP, pour le réseau Internet, créée par la passerelle (Gat). L'identifiant du terminal (Ter) mobile comprend, par exemple, son numéro d'appel ou un numéro d'identifiant de celui-ci, comme par exemple son IMEI et les coordonnées géographiques des éléments d'émission et de réception réalisant la liaison (LRM) du réseau mobile. De manière non limitative, une ou plusieurs adresses IP sont associées à un même terminal (Ter), par exemple pour une liaison (LRM) du réseau mobile établie entre la passerelle (Gat) et le terminal mobile (Ter) sur plusieurs canaux.

Après la création et la mémorisation (cond102) d'une adresse IP associée au terminal mobile, lors d'une étape (ETP103) suivante, la passerelle (Gat) envoie, au serveur (CSVI) d'applicatifs, un message dont le contenu comprend celui de la requête d'initialisation de la communication, émise par le terminal (Ter) mobile et dont l'expéditeur est identifié par l'adresse IP associée au terminal (Ter) mobile. De manière non limitative, la requête d'initialisation de la communication comprend des données d'initialisation correspondant au contexte du terminal.

De manière non limitative, après la réception de ce message (Cond103), via ses moyens (CSVI) de communication, le serveur (SVI) d'applicatifs crée, à l'étape suivante (ETP104), une instance d'objet (2) applicatif de sécurité associé au terminal (Ter) mobile ou associe un applicatif (2) de sécurité existant au terminal (Ter). Le serveur (SVI) d'applicatifs est, par exemple, associé à un espace mémoire (M2) ou une librairie définissant la classe d'objets applicatifs de sécurité. Le serveur (SVI) d'applicatifs est, par exemple, réalisé en enrichissant les fonctionnalités d'un serveur interactif existant.

Le serveur d'applicatifs utilise, par exemple, un protocole de gestion de session, comme par exemple le protocole SIP (Session Initialisation Protocol) normalisé et standardisé par l'IETF (Internet Engineering Task Force) décrit par le RFC 3261, pour établir, modifier ou terminer des sessions d'alerte. Le serveur (SVI) d'applicatifs gère notamment l'établissement d'une session d'alerte associée au terminal (Ter) mobile, sa modification ou sa terminaison. Ce protocole permet par exemple de prendre en charge l'authentification et la localisation de plusieurs intervenants. Ainsi un terminal (Ter) mobile enverra une demande d'ouverture d'une session ou sera appelé pour participer à une session créée, par exemple, par un serveur Internet. Le protocole SIP indépendant de la transmission des données, est utilisé avec tout type de données et de protocoles pour des échanges sur le réseau Internet. Le protocole RTP est par exemple associé au protocole SIP.

De manière non limitative, après l'association (cond104) d'une instance d'objet applicatif (2) avec le terminal (Ter), l'applicatif (2) communique avec le serveur (SAL) d'alertes par ses moyens (CSVI) de communication, et envoie, au serveur (SAL) d'alertes, une commande d'initialisation (ETP105) d'une session (100) d'alerte. Le serveur (SAL) d'alertes réceptionne, par exemple, la commande de création, par ses moyens de communication (CSAL), cette demande étant traitée par une interface logicielle du serveur (SAL) d'alertes. De manière non limitative, les paramètres d'initialisation envoyés par le terminal (Ter) sont utilisés pour l'initialisation d'une session (100) d'alerte correspondant au contexte. Le serveur d'alertes est supporté, de manière non limitative, par une machine dédiée ou par une architecture distribuée, les objets composant le serveur d'alertes étant alors supportés de façon indépendante et reliés entre eux par un bus logiciel par exemple du type ORB (Object Request Broker), par exemple conforme à la norme COM/DCOM de Microsoft ou au standard CORBA.

Un objet (102, 1021, 1022) d'alerte permet, lors de son activation, d'envoyer un message d'alarme déterminé, par plusieurs types de média possibles vers plusieurs destinations possibles.

Le serveur d'alertes, réalisé par exemple sous la forme d'un objet logiciel, est associé à son interface logicielle et à une librairie de stockage de la classe d'objets de session. Les moyens de mémorisation associés au serveur d'alertes comprennent par exemple un espace (M10) mémoire pour stocker la définition de la classe d'objets de session. Une instance d'objet de session est, par exemple, créée par l'objet serveur d'alertes et associée à l'applicatif de sécurité (2) émetteur de la demande. L'objet de session créé comprend des moyens d'envoyer des informations, à la passerelle (Gat), à destination du terminal (Ter) mobile ou vers d'autres destinataires du réseau cellulaire. De manière non limitative un objet de session peut être initialisé en fonction de paramètres correspondant au contexte du terminal.

La fonction d'initialisation de la classe d'objet de session d'alerte retourne par exemple une référence ou un pointeur de l'objet créé. De cette façon, l'applicatif (2) appelant reçoit et mémorise dans un espace mémoire (M100), une valeur retournée telle qu'une référence ou un pointeur de l'objet (100) session créé. Une session (100) est ainsi associée à l'applicatif de sécurité (2). Une réponse à la requête d'initialisation de la communication est aussi envoyée au terminal (Ter) mobile, par exemple, pour signifier l'établissement de la communication entre le terminal (Ter) mobile et la session (100) d'alerte.

Selon un autre exemple de réalisation, le serveur (Ser) de sécurité initialise la communication entre le terminal (Ter) mobile et le serveur d'alertes. Le serveur (Ser) de sécurité réalise par exemple, la création d'une session (100) d'alerte. Puis le serveur de sécurité crée ou associe un applicatif (2) de sécurité, supporté par le serveur (SVI) d'applicatifs et enfin, crée ou associe une ou plusieurs adresses IP correspondant au terminal, dans la passerelle (Gat).

L'établissement de la communication entre la session (100) d'alerte et le terminal ne se limite pas au terminal d'un réseau de radiotélécommunication cellulaire mais peut aussi concerner un terminal équipé de moyens de communication, par exemple, de type Wi-Fi ou Bluetooth®. Le terminal peut aussi être réalisé sous la forme d'un appareil électronique embarqué disposé, par exemple, dans un véhicule et équipé d'une pluralité de moyens de communication permettant d'établir une communication avec une passerelle de la plateforme communiquant avec plusieurs réseau différents.

De manière non limitative, les serveurs de la plateforme sont réalisés avec des objets logiciels et les requêtes de paramétrage sont adressées à la session d'alerte ou à des objets attributs de la session (100) d'alerte ou à des fonctions attributs de la session (100). Les objets attributs sont modifiés, de manière non limitative, directement ou par des fonctions attributs. Une session d'alerte sera modifiée par des objets de son réseau ou par des terminaux dans d'autres réseaux reliés à la plateforme par une passerelle.

De manière non limitative, les requêtes, produites par le terminal (Ter) mobile, sont transmises via la passerelle (Gat) à l'applicatif (2) de sécurité qui traite ces requêtes et adresse au serveur (SAL) d'alertes les requêtes de paramétrage ou de commande de la session (100) d'alerte. Les procédés de paramétrage seront décrits, de manière non limitative, avec des requêtes de paramétrage provenant, par exemple, du terminal (Ter) mobile. Le terminal (Ter) par son programme de paramétrage interactif, basé sur son interface (IHM) homme machine, permet de réaliser des choix traités et interprétés pour envoyer une ou plusieurs requêtes de paramétrage ou d'autres requêtes. De manière non limitative, la session (100) d'alerte renvoie, par exemple, des réponses aux requêtes, ces réponses indiquant à l'expéditeur, la réception de la requête ou l'état de la session (100) d'alerte. Les réponses aux requêtes sont adressées, par exemple, au terminal (Ter) sous surveillance, associé à la session (100) d'alerte, via la passerelle (Gat), ou à un objet (52) logiciel d'un serveur (Ser) du réseau. Les réponses adressées au terminal (ter) mobile permettent, par exemple, un affichage de menus interactifs par le terminal (Ter), ces menus étant accédés par l'utilisateur. De manière non limitative, les menus proposés à l'utilisateur comprennent chacun des choix multiples dont un retour au menu précédent. Un menu suivant est, par exemple, affiché en fonction de la réponse à la requête.

Un exemple non limitatif de procédé de paramétrage d'une alerte à envoyer dans une situation d'urgence est représenté à la figure 5.

Le terminal commandé, par exemple, par l'interface utilisateur, envoie (ETP201) une requête de demande de paramétrage de la session (100) d'alerte. Après l'envoi de cette requête (cond201) le terminal (Ter) exécute une étape (ETP2011) suivante d'attente de réponse à sa requête. La session (100) d'alerte reçoit la requête de demande de paramétrage et envoie, par exemple, une réponse comprenant des données représentatives de son état et des états activés ou désactivés des objets d'évaluation associés au contexte de la session.

A la réception (cond2011) d'une réponse comprenant des données représentatives d'un état désactivé des objets d'évaluation, le terminal (Ter) exécute une étape suivante (ETP202) de choix du type de paramétrage, par exemple, par un menu interactif. L'utilisateur peut, par exemple, choisir entre le paramétrage des messages ou des procédures d'alerte, le paramétrage des entrées surveillées ou le paramétrage des scénarii d'évaluation.

Après le choix (cond202) du paramétrage des alertes, le terminal (Ter) mobile envoie, par exemple, à l'étape suivante (ETP2021), une requête de demande de paramétrage des alertes, à destination de la session (100) d'alerte. Après l'envoi (cond2021) de la requête de demande de paramétrage des alertes, le terminal (Ter) exécute, par exemple, une étape (ETP2022) suivante d'attente de la réponse de la session (100) d'alerte. La session (100) d'alerte reçoit par exemple, la requête de demande de paramétrage des alertes et envoie, par exemple, une réponse comprenant des données représentatives de ses différentes alertes. La session exécute par exemple, une fonction attribut qui renvoie une référence pointant sur les références de ses objets d'alerte.

A la réception (cond2022) de cette réponse, le terminal (Ter) exécute par exemple, une étape (ETP203) suivante de sélection d'une alerte. Un menu interactif de sélection, réalisé en fonction des données reçues représentatives des différentes alertes, propose, par exemple, de sélectionner une des alertes (cond203) existantes. Le menu propose, par exemple, aussi le choix (cond2031) d'une nouvelle alerte.

Si le choix de création d'une nouvelle alerte (cond2031) est réalisé, par exemple, par l'utilisateur, le terminal (Ter) exécute une étape (ETP2031) suivante d'envoi d'une requête de création d'une nouvelle alerte. Après l'envoi (cond2032) de cette requête, le terminal exécute une étape (ETP2032) suivante d'attente de la réponse à la demande de création d'une nouvelle alerte. La session (100) d'alerte recevant la requête de création d'une nouvelle alerte utilise, par exemple, une fonction attribut d'initialisation d'un nouvel objet d'alerte. Après la création d'une nouvelle alerte, la session (100) d'alerte renvoie, par exemple, une réponse à la requête du terminal, comprenant une référence pointant sur la nouvelle alerte. Après la réception (cond2033) de la référence de la nouvelle alerte, par le terminal (Ter), la nouvelle alerte est sélectionnée et une étape suivante (ETP204) de modification de l'alerte sélectionnée est, par exemple, exécutée par le terminal (Ter) mobile.

Si le nouvel objet comprend des paramètres par défaut, déjà initialisés, une sortie de paramétrage ou un retour à une étape précédente peut être réalisée. De manière non limitative, la requête de création d'une nouvelle alerte comprend des données représentatives du contexte, utilisées pour l'initialisation automatique de l'objet d'alerte. Un objet d'alerte est par exemple initialisé à partir d'une bibliothèque de classes d'objets de d'alerte, stockée en mémoire, enrichie par des classes d'objets d'alerte experts, propres à un usage déterminé ou par des objets paramétrés.

Selon un autre exemple, la session (100) d'alerte recevant la requête de création d'une nouvelle alerte, renvoie une réponse comprenant une liste de plusieurs alertes ou de plusieurs types d'alerte. La réception de cette liste par le terminal (Ter) permet, par exemple, l'affichage d'un menu pour sélectionner une alerte ou un type d'alerte dans la liste, puis envoyer une requête de création d'alerte correspondante.

Si une sélection (cond203) d'une des alertes existantes est réalisée, le terminal (Ter) exécute, par exemple, l'étape (ETP204) de modification de l'alerte sélectionnée.

A l'étape (ETP204) de modification de l'alerte sélectionnée, le terminal (Ter) propose, par exemple, par un menu interactif, le choix entre le paramétrage ou la suppression de l'alerte sélectionnée.

En cas d'erreur, le nouvel objet est, par exemple, immédiatement supprimé.

Après le choix d'un paramétrage (cond2042), le terminal (Ter) exécute par exemple, une étape suivante (ETP2042) de sélection, par exemple par un menu interactif, d'un type de message associé à un moyen d'envoi. De manière non limitative, des données représentatives des différents types de messages associés à différents types de moyens d'envoi, sont stockées dans une librairie du terminal (Ter) ou sont fournies dans une des réponses envoyées précédemment par la session (100) d'alerte.

De manière non limitative, l'alerte est réalisée par la transmission de messages du type texte, photo, film ou message vocal envoyés à un terminal du réseau cellulaire. Les messages d'alerte sont par exemple, des messages de type SMS, ou MMS.

De manière non limitative, le message d'alerte est envoyé vers un serveur (Ser) du réseau. Le type de message proposé est, par exemple, un message du type courrier électronique ou du type requête standard. L'objet (1022) d'alerte est par exemple modifié pour mémoriser le type de message et l'adresse réseau de l'objet (51) récepteur.

De manière non limitative, l'alerte peut être un message audio ou vidéo transmis par des composants de l'interface (IHM) homme machine du terminal (Ter) associé à la session, comme par exemple, le haut parleur (HP) ou l'écran (DISP). Le type de message proposé est, par exemple, un message de type texte, image, message sonore ou vidéo, transmis par l'interface utilisateur. Un message sonore est par exemple, répété en boucle, avec un volume maximum, pour prévenir d'une faiblesse physique détectée par un capteur biométrique. L'objet d'alerte est modifié pour enregistrer le type de message associé à l'adresse IP de la passerelle correspondant au terminal (Ter) mobile sous surveillance.

Selon un autre exemple un message sonore est par exemple répété en boucle pour prévenir d'un vol de portable détecté. L'objet d'alerte commande aussi l'affichage d'une invitation à entrer un code secret, le téléphone restant par exemple, bloqué par l'objet d'alerte, tant qu'un code mémorisé dans l'objet d'alerte n'a pas été transmis à la session.

Après la mémorisation (cond2043), par exemple, dans une mémoire (TMP) temporaire, du choix du type de message associé à un moyen de communication utilisé, le terminal (Ter) exécute par exemple, une étape suivante (ETP2043) de définition du contenu du message, par exemple, par l'interface (IHM) utilisateur. De manière non limitative, un nouveau contenu est entré, par l'interface (IHM) utilisateur, ou un contenu prédéfini est choisi dans un menu interactif. Le menu de choix du contenu est par exemple, réalisé à partir d'une bibliothèque du terminal (Ter) ou à partir de données envoyées lors d'une des réponses précédentes de la session (100) d'alerte. Les messages prédéfinis sont, par exemple, du type texte, photo, vidéo ou son.

Selon un exemple non limitatif, des données représentatives de texte, de sons ou respectivement d'images, sont entrées par l'interface utilisateur, par le clavier (KB), le micro (MIC) ou respectivement la caméra (CAM) pour réaliser, en partie, un message d'alerte. Ainsi l'utilisateur peut personnaliser ses alertes.

Après enregistrement du contenu (cond2044), dans une mémoire temporaire du terminal (Ter), le terminal (Ter) exécute, par exemple, une étape suivante (ETP2044) de choix d'informations instantanées insérées au contenu du message d'alerte. Une référence pointant sur un ensemble de données, est par exemple, définie durant cette étape. Les données insérées sont des données produites par le terminal (Ter) mobile, envoyées à la session (100) d'alerte et insérées, en cas de déclenchement d'une alerte, au contenu d'un message d'alerte envoyé.

De manière non limitative, les données instantanées, insérées au contenu du message d'alerte, sont des données envoyées par le terminal (Ter) mobile, pour être traitées et testées selon les différents scénarii d'analyse, ou les données instantanées insérées au contenu du message d'alerte, sont des données supplémentaires transmises en plus des données testées.

Selon un exemple non limitatif, des données représentatives d'informations instantanées transmises à la session et mémorisées dans une mémoire temporaire du serveur (SAL) d'alertes, sont incorporées au message. Les références des données à insérer sont, par exemple, transmises lors de l'initialisation de l'alerte, l'objet d'alerte stockant, par exemple, un pointeur ou une adresse de stockage de données instantanées.

Les données destinées à être insérées au message d'alerte, en cas d'alerte, sont, par exemple, des coordonnées géographiques transmises par le terminal (Ter) à la session (100) d'alerte. Le contenu du message mémorisé dans l'objet d'alerte, est par exemple enrichi par des données produites par un dispositif de localisation du terminal (Ter). Ainsi le récepteur du message d'alerte pourra connaître les positions successives du terminal (Ter) sous surveillance avant ou pendant l'état d'urgence.

Selon un autre exemple les données destinées à être insérées au message d'alerte, en cas d'alerte, correspondent à un enregistrement sonore d'une durée déterminée, réalisé par le microphone et transmis en temps réel par le terminal (Ter) à la session (100) d'alerte.

Selon un autre exemple, les données destinées à être insérées au message d'alerte, en cas d'alerte, correspondent à l'état d'un capteur du terminal, ces données étant par exemple, transmises en continu à la session d'alerte, avec un écrasement périodique des anciennes données mémorisées par la session. Ainsi l'objet d'alerte ira lire à une adresse déterminée, les données instantanées mémorisées. Le capteur réalisant l'acquisition des données transmises à la session (100) d'alerte est, par exemple, une caméra (CAM) vidéo. Ainsi le récepteur du message d'alerte pourra visionner des images donnant un aperçu de l'environnement de l'utilisateur aux environs du déclenchement de l'alerte. Un utilisateur portant un dispositif de communication dans une poche, à hauteur de son épaule, peut, par exemple, transmettre des images de personnes qui l'ont agressé, dans le cas où les agresseurs sont responsables du déclenchement d'une alerte.

Selon un exemple non limitatif, des données produites par un capteur biométrique, permettant de surveiller à distance et en continu l'état du patient sont insérées au contenu du message d'alerte pour permettre, par exemple, au récepteur du message de connaître précisément les circonstances de déclenchement de l'alerte.

Selon un exemple non limitatif, l'enrichissement du message d'alerte est réalisé par l'insertion de données représentatives d'informations reçues par les objets de surveillance.

De manière non limitative, après l'enregistrement (cond2045), par exemple, dans une mémoire temporaire du terminal (Ter) mobile, des références des données destinées à être insérées au contenu, une étape (ETP2045) suivante de définition d'une destination est réalisée.

De manière non limitative, la requête comprenant la destination est formulée à partir d'une liste de destinations. La liste de destinations est, par exemple, fournie par la session (100) d'alerte dans une de ses précédentes réponses aux requêtes, ou cette liste de destinations provient du terminal (Ter) mobile, comme par exemple de son répertoire. Le choix de la destination est, par exemple, réalisé par un utilisateur, à l'aide d'un menu interactif. Des destinations sont par exemple, un numéro de téléphone ou un numéro de fax ou une adresse postale électronique ou l'adresse d'un serveur recevant des requêtes d'alerte.

La destination d'un message d'alerte peut aussi être le haut parleur (HP) du terminal (Ter) sous surveillance, recevant un message sonore ou l'écran (DISP) du terminal (Ter) affichant un message d'alerte ou encore un connecteur (LIN) du terminal (Ter) auquel un dispositif de diffusion du message d'alerte est connecté.

Selon un exemple non limitatif, la destination est déterminée par défaut pour la diffusion d'un message sonore d'alerte par le haut parleur (HP), jusqu'au déblocage de l'état d'alerte. Ainsi dans le cas où le vol du terminal (Ter) est détecté, le dispositif peut se placer dans un état de blocage de toutes les fonctions avec un message affiché à l'écran, tandis qu'un message sonore indiquant le vol, est diffusé en continu. D'une part ce type d'alerte est dissuasif mais une alerte sonore informe aussi l'utilisateur d'un vol ou d'un danger.

De manière non limitative, après l'enregistrement (cond2046), par exemple, dans une mémoire temporaire du terminal (Ter) mobile, de la ou des destinations du message d'alerte, une étape (ETP2046) de définition des paramètres de déblocage d'état d'urgence, est réalisée. Ces paramètres sont, par exemple, un code de déverrouillage, tapé sur le clavier du terminal (Ter) ou envoyé par un serveur (Ser) de sécurité après l'état d'urgence. Un utilisateur peut, par exemple, désactiver un objet d'alerte en entrant son code personnel d'identification, également appelé code PIN, ou en entrant un autre code secret.

Des données représentatives d'un code confidentiel correspondent, par exemple, à une combinaison de touches ou à des touches activées successivement ou à un mot ou une phrase reconnu par reconnaissance vocale ou encore à un paramètre biométrique, comme par exemple une empreinte digitale ou une empreinte rétinienne. Le déblocage peut aussi être réalisé par analyse et reconnaissance d'une empreinte vocale de l'utilisateur.

Selon un exemple non limitatif, le déblocage peut aussi être réalisé par un mot clé, enregistré sous forme de données représentatives. Le terminal (Ter) reste, par exemple, bloqué jusqu'à la prononciation du mot clé, par l'utilisateur. L'objet d'alerte activé réalisera, par exemple, une comparaison des données de déblocage avec des données représentatives de sons enregistrés par le micro et transmis à la session par le terminal (Ter) bloqué en mode alerte, pour autoriser son passage à un état désactivé.

Selon un exemple non limitatif, l'objet d'alerte après l'envoi d'un ou plusieurs messages d'alerte, retourne automatiquement dans sa position non activée. De manière non limitative, un objet d'alerte peut être activé plusieurs fois de suite par un objet d'évaluation associé. Le passage de l'objet d'alerte dans un état désactivé est alors signifié au terminal (Ter) qui n'est alors plus bloqué par cet objet d'alerte.

Après l'enregistrement (cond2047), par exemple, dans une mémoire temporaire du terminal (Ter) mobile, du ou des paramètres de déblocage, le terminal (Ter) exécute une étape (ETP2047) de réglage de l'alerte. Une requête de réglage d'alerte est par exemple envoyée par le terminal (Ter) mobile, à la session (100) d'alerte. Cette requête est, par exemple, adressée à la session (100) d'alerte et à l'objet d'alerte sélectionné. La requête de réglage d'alerte comprend, de manière non limitative, des données représentatives :
- du type de message et du moyen de communication associé,
- du contenu du message d'alerte,
- des données insérées au contenu du message d'alerte,
- de la ou des destinations du message d'alerte, ou
- d'un code de déblocage.

De manière non limitative, la requête de réglage d'alerte comprend la référence de l'alerte sélectionnée.

Après l'envoi (cond2048) de la requête de réglage d'alerte, le terminal (Ter) exécute, par exemple, une étape (ETP2048) suivante d'attente de la réponse de la session. A la réception de la requête de réglage d'alerte est, par la session (100) d'alerte, une fonction de réglage de l'objet d'alerte sélectionné, est, par exemple, exécutée, avec comme paramètres d'entrée les données fournies par la requête de réglage d'alerte. Cette fonction renvoie par exemple, une confirmation de réglage de l'alerte, transmise au terminal, en réponse à sa requête.

A la réception de la réponse à la requête de réglage d'alerte, comprenant des données confirmant le réglage de l'alerte, le terminal (Ter) exécute, par exemple, une étape suivante (ETP210) durant laquelle les données temporaires de paramétrage sont supprimées et durant laquelle un menu interactif propose, à l'utilisateur de quitter le paramétrage (cond2102) ou de réaliser un autre paramétrage (cond2101).

Un exemple de suppression d'alerte va maintenant être décrit. A l'étape (ETP204) de modification de l'alerte sélectionnée, un utilisateur choisit, par exemple par un menu interactif, la suppression de l'objet sélectionné. Après la sélection (cond2041) d'une suppression de l'alerte sélectionnée, le terminal (Ter) mobile exécute, de manière non limitative, une étape suivante (ETP2041) de confirmation de suppression de l'alerte sélectionnée. Durant cette étape (ETP2041) un menu interactif permet, par exemple, de retourner à une étape précédente pour abandonner la suppression ou de choisir (cond20411) d'archiver l'alerte sélectionnée avant sa suppression ou (cond20412) de confirmer la suppression de l'alerte sélectionnée.

Après le choix (cond20411) d'un archivage de l'alerte par l'utilisateur, le terminal (ter) exécute, par exemple, une étape suivante (ETP20411) d'archivage de l'alerte. De manière non limitative, des données représentatives de l'alerte sont mémorisées dans le terminal (Ter) mobile ou sont envoyées à la session (100) d'alerte pour être mémorisées par le serveur (SAL) d'alertes. L'alerte est, par exemple, archivée dans un espace mémoire de stockage d'une bibliothèque d'alerte comprenant des alertes par défaut et éventuellement des alertes paramétrées par l'utilisateur. L'objet (102) d'alerte nouvellement stocké est associé, par exemple, à un nom d'alerte entré par l'interface l'utilisateur ou est associé à des données représentatives d'un contexte du terminal, utilisés lors de l'initialisation. La bibliothèque de d'objet d'alerte peut ainsi être enrichie par des objets configurés au cas par cas. L'objet (102) d'alerte nouvellement stocké est par exemple, associé à un nom d'alerte, entré par l'utilisateur, ou à des données représentatives du contexte du dispositif portable de communication, utilisés, par exemple lors de l'initialisation. Une donnée d'initialisation est par exemple recherchée et identifiée dans les attributs des classes d'objets mémorisés.

Après la mémorisation (cond20413) de l'alerte dans une bibliothèque du terminal (Ter), le terminal (Ter) exécute, par exemple, une étape (ETP20412) suivante de demande de suppression de l'alerte.

Selon un autre exemple de réalisation, l'alerte est stockée dans le serveur (SAL) d'alertes. Le terminal (Ter) envoie, par exemple, une requête d'archivage comprenant un nom d'archivage et se place en attente d'une réponse de confirmation d'archivage, avant de passer à l'étape (ETP20412) de suppression de l'alerte.

Durant l'étape de demande suppression (ETP20412) de l'alerte sélectionnée, le terminal (Ter) envoie, par exemple, une requête de suppression d'alerte, l'alerte à supprimer étant désignée, par exemple, par la référence de l'alerte sélectionnée.

Après l'envoi (cond20414) de la requête de suppression d'alerte, le terminal (Ter) exécute, par exemple, une étape (ETP20413) suivante d'attente de la réponse de la session (100) d'alerte. La session (100) d'alerte, en recevant la requête de suppression d'alerte avec la référence de l'alerte sélectionnée, exécute par exemple, une fonction de suppression d'alerte dont les paramètres d'entrée comprennent la référence transmise dans la requête. La fonction attribut renvoie par exemple, une confirmation de suppression, transmise en réponse à la requête de suppression d'alerte.

Après la réception de la réponse confirmant la suppression de l'alerte (cond20415), le terminal (Ter) exécute, par exemple, l'étape suivante (ETP210) durant laquelle les données temporaires de paramétrage sont supprimées et durant laquelle un menu interactif propose à l'utilisateur de quitter le paramétrage (cond2102) ou de réaliser un autre paramétrage (cond2101).

L'ordre des commandes de paramétrage d'objets d'émission d'alerte ou de commande d'archivage de ces objets ou d'initialisation d'une nouvelle alerte, précédemment décrit, n'est pas limitatif. Ces commandes peuvent, par exemple, être exécutées seules ou dans un ordre différent. Une commande d'archivage pourra par exemple, être exécutée seule pour enrichir la bibliothèque par des objets d'émission d'alerte paramétrés. D'autre part les commandes peuvent être exécutées automatiquement par l'objet d'apprentissage de la session ou à distance par le serveur de sécurité.

Un exemple non limitatif de paramétrage d'un déclencheur va maintenant être décrit, en référence à la figure 6. Lors de l'exécution de l'étape (ETP202) de choix du type de paramétrage, un utilisateur pourra choisir (cond2023) le paramétrage des déclencheurs, par exemple, via l'interface (IHM) homme machine.

Après le choix (cond2023) du paramétrage des déclencheurs, le terminal (Ter) mobile envoie, par exemple, à l'étape (ETP2023) suivante, une requête de demande de paramétrage des déclencheurs. Après l'envoi (cond2024) de la requête de demande de paramétrage des déclencheurs, le terminal (Ter) exécute, par exemple, une étape (ETP2024) suivante d'attente de la réponse de la session (100) d'alerte. La session d'alerte reçoit, par exemple, la requête de demande de paramétrage des déclencheurs et envoie, par exemple, une réponse comprenant des données représentatives des différents déclencheurs de la session. La session exécute, par exemple, une fonction attribut qui renvoie les références de ses objets de surveillance.

A la réception (cond2025) de cette réponse, le terminal (Ter) exécute, par exemple une étape (ETP205) suivante de sélection d'un déclencheur correspondant, par exemple, à un objet de surveillance. Un menu interactif de sélection, réalisé en fonction des données reçues représentatives des différents déclencheurs, propose, par exemple, de sélectionner un des déclencheurs (cond205) existants. Le menu propose, par exemple, aussi le choix (cond2051) d'un nouveau déclencheur.

Si l'utilisateur choisit la création d'un nouveau déclencheur (cond2051) le terminal (Ter) exécute par exemple, une étape suivante (ETP2051) d'envoi d'une requête de demande de création d'un nouveau déclencheur. Après l'envoi (cond2052) de cette requête, le terminal (Ter) exécute, par exemple, une étape suivante (ETP2052) d'attente de la réponse à sa requête. La session d'alerte (100) reçoit, par exemple, la requête de demande de création d'un nouveau déclencheur et appelle une fonction attribut d'initialisation d'un nouveau déclencheur. De manière non limitative, la requête de création d'un nouveau déclencheur comprend des données représentatives du contexte, utilisées pour l'initialisation de l'objet déclencheur.

Un objet de surveillance est par exemple initialisé à partir d'une bibliothèque de classes d'objets de surveillance, stockée en mémoire, enrichie par des classes d'objets de surveillance experts, propres à un usage déterminé et par des objets paramétrés sauvegardés. Un capteur ou un détecteur particulier, nécessitera par exemple, un objet de surveillance associé permettant une interprétation des signaux ou des données fournies par ce capteur. Un capteur est par exemple, associé, en sortie, à un filtrage et une amplification déterminés paramétrables. Un objet de surveillance est, par exemple, associé à plusieurs capteurs déterminés, l'objet de surveillance réalisant des pondérations paramétrables des données provenant des différents capteurs, ces pondérations pouvant être répétées ou conditionnelles.

Après la création du nouvel objet de surveillance, correspondant à un nouveau déclencheur, des données représentatives de ce nouveau déclencheur sont, par exemple, renvoyées par la fonction d'initialisation. Les données représentatives du nouveau déclencheur sont par exemple, envoyées au terminal en réponse à sa requête.

Après la réception (cond2053) de la référence du nouveau déclencheur par le terminal (Ter), le nouveau déclencheur est sélectionné et une étape suivante (ETP206) de modification du déclencheur sélectionné est, par exemple, exécutée par le terminal (Ter).

De manière non limitative, le nouveau déclencheur comprend des paramètres par défauts ou le déclencheur est choisi dans une liste parmi plusieurs déclencheurs ou selon un type déterminé de déclencheur. La session (100) d'alerte renvoie par exemple une liste de types de déclencheurs possibles, pour être choisis par l'utilisateur.

Si à l'étape (ETP205) de sélection d'un déclencheur, un déclencheur existant est sélectionné (cond205), le terminal exécute, par exemple, l'étape (ETP206) de configuration du déclencheur sélectionné.

A l'étape (ETP206) de configuration du déclencheur sélectionné, l'utilisateur, choisit, par exemple, via l'interface (IHM) homme machine, le paramétrage (cond2061) de la surveillance réalisée par le déclencheur. De manière non limitative, le terminal (Ter) mobile exécute alors une étape (ETP2061) suivante de choix du capteur associé. Le capteur est, par exemple, choisi dans un menu de sélection interactif. Le contenu du menu de sélection de capteur provient, par exemple, d'une bibliothèque mémorisée dans le terminal (Ter) ou provient de données transmises par la session (100) d'alerte dans des réponses précédentes. L'utilisateur peut, par exemple, choisir l'utilisation d'un bouton ou d'une combinaison de boutons comme capteur déclencheur. L'utilisateur paramètre ainsi son dispositif portable de communication pour pouvoir déclencher une alerte très rapidement par un appui sur un ou plusieurs boutons de son choix.

Selon un exemple non limitatif, l'utilisateur choisit le micro (MIC) comme capteur déclencheur. Les sons captés par le micro sont alors traités, lorsque les objets d'évaluation de la session (100) d'alerte sont activés, pour détecter un mot ou une phrase de déclenchement. Ainsi l'utilisateur peut paramétrer une session (100) d'alerte pour que le fait de prononcer le mot « danger », lorsque les évaluations de la session d'alerte sont actives, soit un déclencheur d'une alerte déterminée. De façon avantageuse un utilisateur effectuant un travail manuel comportant des risques pourra déclencher son dispositif de communication à distance sans avoir à manipuler le clavier ou appuyer sur un bouton. De manière non limitative, la phrase ou le mot déclencheur sont quelconques et peuvent être enregistrés par l'utilisateur.

Selon un exemple non limitatif, l'utilisateur choisit un lecteur radiofréquence, par exemple, du type RFID, comme capteur déclencheur. Le lecteur RFID (Radio Frequency IDentification) est par exemple intégré au terminal mobile et associé à une carte RFID transportée par l'utilisateur avec son terminal (Ter) mobile. Le lecteur radiofréquence émet par exemple un signal comprenant une énergie d'alimentation de la carte radiofréquence et des données de commande pour que la carte radiofréquence transmette, en réponse, son numéro d'identification. Le lecteur radiofréquence peut ainsi détecter l'absence ou la présence de la carte radiofréquence de l'utilisateur. Dans le cas où la carte radiofréquence transmet son numéro d'identification, en réponse à la requête du lecteur, le lecteur produit une variable représentative de la présence de cette carte. Dans le cas, par exemple, où le téléphone est volé ou perdu, le lecteur détecte l'absence de la carte de l'utilisateur, permettant ainsi de déclencher une alerte anti-vol. En cas de déclenchement de l'alerte antivol, les fonctions du terminal mobile sont, par exemple, bloquées et l'entrée d'un code secret, par le clavier, est demandée pour sortir de l'état d'alerte détectée et autoriser de nouveau le libre fonctionnement du terminal (Ter) mobile.

Selon un exemple non limitatif, l'utilisateur choisit un capteur biométrique comme capteur déclencheur, le capteur biométrique étant connecté par le connecteur au terminal mobile. De manière non limitative, un ou plusieurs capteurs biométriques sont reliés au terminal mobile qui peut alors servir pour réaliser un diagnostic précoce ou une télésurveillance de l'utilisateur.

Selon un exemple non limitatif, l'ensemble des données représentatives des paramètres biométriques mesurés est transmis de façon périodique au serveur (SAL) d'alertes, le dispositif portable de communication étant alors équivalent à une centrale de mesures ambulatoire. Les capteurs sont par exemple, des capteurs portés par l'utilisateur, de type casque, bandeau, gilet, ceinture, bracelet ou chaussure. Ces différents capteurs fournissent par exemple des données représentatives de caractéristiques biométriques pour réaliser des tests de vigilance ou des tests de comportement.

Selon un exemple non limitatif, le capteur choisit par l'utilisateur est un capteur produisant des données représentatives de l'environnement de l'utilisateur. Ce capteur est, par exemple, un capteur réalisant une analyse chimique pour déterminer la présence d'un gaz toxique ou le taux d'oxygène ou encore la température de l'air. Ainsi un pompier est non seulement averti en cas de présence d'un gaz toxique, mais un message est aussi envoyé à un poste de surveillance ou à un coéquipier, pour que le pompier soit assisté le plus rapidement possible. De plus en cas d'alerte la combinaison des capteurs environnementaux et des capteurs biométriques permet de transmettre des paramètres pour surveiller le pompier et prévoir les risques. Une communication est, par exemple, établie en cas de danger, les informations nécessaires à l'évaluation du danger étant transmises avant ou en même temps que l'établissement de la communication.

Après la mémorisation (cond2062) du capteur ou d'un pointeur vers une adresse de stockage des données du capteur, par exemple, dans une mémoire temporaire du terminal (Ter), le terminal (Ter) exécute une étape suivante (ETP2062) de choix du traitement préliminaire des données produites par le capteur. Une fonction de traitement préliminaire est par exemple choisie dans une bibliothèque de fonctions de traitement. De manière non limitative, la bibliothèque de fonctions de traitement est stockée en mémoire dans le terminal ou est fournie par la session (100) d'alerte dans une des précédentes réponses à une requête. La fonction de traitement préliminaire est, par exemple, une fonction de recopie de la donnée produite par le capteur, la variable (V01) d'alerte associée à l'objet de surveillance étant réglée avec cette donnée.

Selon un autre exemple, la fonction de traitement préliminaire réalise une opération de mise en forme ou de mise à l'échelle de la donnée reçue avant le positionnement de la variable d'alerte. La mise en forme comprend par exemple, la suppression d'un en-tête ou d'une partie d'identification du capteur et la mise à l'échelle comprend, par exemple, la pondération paramétrable par un facteur ou la soustraction d'un seuil paramétrable de référence.

Selon un autre exemple, la fonction de traitement préliminaire réalise une intégration ou une dérivation du paramètre reçu pour transmettre le résultat de réglage de la variable d'alerte associée à l'objet de surveillance. De manière non limitative, la fonction de traitement peut aussi réaliser un traitement du signal, par exemple, par un filtre paramétrable, appliqué à la donnée numérique produite par le capteur.

Selon un autre exemple, la fonction de traitement préliminaire de la donnée produite par le capteur, est une fonction de comparaison avec un seuil paramétrable de référence pour régler la variable d'alerte dans un état binaire représentatif d'une urgence ou représentatif d'un état normal.

Après l'enregistrement de la fonction de traitement préliminaire (cond2063), par exemple en mémoire temporaire du terminal (Ter), le terminal (Ter) exécute, par exemple, une étape (ETP2063) suivante d'initialisation des paramètres de la fonction de traitement. L'utilisateur peut, par exemple, choisir, par un menu interactif de sélection, les paramètres de la fonction de traitement. Ce menu est par exemple basé sur la bibliothèque du terminal ou sur des données transmises par la session (100) d'alerte.

Selon un exemple de réalisation, les paramètres sont directement entrés par l'utilisateur à l'aide de l'interface (IHM) utilisateur.

Après l'enregistrement (cond2064), par exemple en mémoire temporaire du terminal (Ter) mobile, le terminal mobile exécute, par exemple, une étape (ETP2064) suivante de définition d'une temporisation.

De manière non limitative, la temporisation peut être réglée pour retarder l'effet d'une donnée de déclenchement ou la temporisation peut être réglée nulle pour supprimer le retard de déclenchement. De manière non limitative, une donnée de déclenchement peut ne pas être prise en compte si le facteur déclenchant se produit pendant une durée inférieure à la durée de temporisation.

Selon un autre exemple, la temporisation peut être utilisée seule sans capteur déclencheur, la variable d'alerte étant représentative d'une temporisation en cours ou de la fin d'une temporisation, avec la fin de temporisation déclenchant une alerte.

Après l'enregistrement (cond2065) de la durée de temporisation en mémoire temporaire du terminal (Ter), le terminal (Ter) exécute, par exemple, une étape (ETP2065) suivante de réglage du déclencheur. Une requête de réglage de déclencheur est, par exemple, envoyée par le terminal (Ter) mobile, à la session d'alerte. Cette requête est, par exemple adressée à l'objet de surveillance sélectionné de la session d'alerte (100). La requête de réglage de déclencheur comprend, de manière non limitative, des données représentatives :
- du capteur sélectionné,
- de la fonction de traitement des données produites par le capteur,
- des paramètres de la fonction de traitement des données du capteur, ou
- de la durée de la temporisation de déclencheur.

Après l'envoi (cond2066) de la requête de réglage de déclencheur, le terminal (Ter) exécute par exemple, une étape suivante (ETP2066) d'attente de la réponse de la session (100) d'alerte. A la réception de la requête de réglage de déclencheur, par la session (100) d'alerte, une fonction de réglage de l'objet de surveillance est par exemple appelée. Les données transmises dans la requête de réglage de déclencheur sont, par exemple, utilisées comme paramètres d'entrée de cette fonction attribut de la session (100) d'alerte. Cette fonction de réglage de l'objet de surveillance renvoie, par exemple, une confirmation de réglage du déclencheur, transmise en réponse au terminal (Ter) mobile.

A la réception (cond2067) de la réponse à la requête de réglage de déclencheur, comprenant des données confirmant le réglage du déclencheur, le terminal (Ter) exécute, par exemple, l'étape (ETP210) durant laquelle les données temporaires de paramétrage sont supprimées et durant laquelle un menu interactif propose à l'utilisateur de quitter le paramétrage (cond2102), ou de réaliser un autre paramétrage (cond2101).

Un exemple de suppression d'un déclencheur va maintenant être décrit. L'étape (ETP206) de modification permet, par exemple, à l'utilisateur de choisir dans un menu interactif la suppression du déclencheur sélectionné. Après la sélection (cond2068) d'une suppression du déclencheur, le terminal (Ter) exécute par exemple, une étape (ETP2068) à laquelle un menu interactif propose, par exemple, une annulation de la suppression, ou la confirmation (cond20681) de la suppression, ou un archivage (cond20682) du déclencheur avant la suppression.

Après la sélection (cond20682) de l'archivage, le terminal (Ter) exécute, par exemple, une étape (ETP20682) d'envoi d'une requête de demande d'archivage du déclencheur sélectionné. Des données représentatives du déclencheur sont stockées, par la session, dans une bibliothèque du serveur d'alertes et sont, par exemple, associées à un nom rentré par l'utilisateur, ou à des données représentatives du contexte, pour pouvoir être appelées lors d'une initialisation. La bibliothèque d'objets de surveillance peut ainsi être enrichie par des objets configurés au cas par cas.

Après la réception de la confirmation de l'archivage (cond20683) le terminal (Ter) mobile exécute, par exemple, une étape suivante (ETP20681) de demande de suppression du déclencheur.

L'étape (ETP20681) de demande de suppression du déclencheur comprend, par exemple, l'envoi, par le terminal (Ter) mobile, d'une requête de demande de suppression du déclencheur sélectionné, adressée à la session (100) d'alerte. Après l'envoi de cette requête (cond20684) le terminal (Ter) se place, par exemple, dans une étape (ETP20683) d'attente de la réponse de la session (100) d'alerte. La session (100) d'alerte recevant cette requête, exécute, par exemple, une fonction attribut correspondante, de suppression de l'objet de surveillance correspondant. La fonction retourne par exemple, une valeur représentative de la confirmation de la suppression, transmise en réponse à la requête du terminal. A la réception (cond20685) de la réponse de la session (100) d'alerte, le terminal (Ter) mobile exécute, par exemple, l'étape suivante (ETP210) durant laquelle les données temporaires de paramétrage sont supprimées et durant laquelle un menu interactif propose, à l'utilisateur de quitter le paramétrage (cond2102) ou de réaliser un autre paramétrage (cond2101).

L'ordre des commandes de paramétrage d'objets de surveillance ou de commande d'archivage de ces objets ou d'initialisation d'un nouvel objet de surveillance, précédemment décrit, n'est pas limitatif. Ces commandes peuvent, par exemple, être exécutées seules ou dans un ordre différent. Une commande d'archivage pourra par exemple, être exécutée seule pour enrichir la bibliothèque par des objets de surveillance paramétrés. D'autre part ces commandes peuvent être exécutées automatiquement par l'objet d'apprentissage de la session ou à distance par le serveur de sécurité.

Un exemple non limitatif de procédé de paramétrage des scénarii d'évaluation de risque de situations va maintenant être décrit en référence à la figure 7.

Lors de l'exécution de l'étape (ETP202) de choix du type de paramétrage, un utilisateur pourra choisir (cond2026) le paramétrage des scénarii, par exemple, via l'interface (IHM) homme machine. Après le choix du paramétrage des scénarii (cond2026), le terminal (Ter) exécute, par exemple, une étape suivante (ETP2026) d'envoi d'une requête de demande de paramétrage des scénarii, adressée à la session (100) d'alerte. Après l'envoi de cette requête (cond2027), le terminal (Ter) se place (ETP2027), par exemple, en attente de la réponse à sa requête. La session (100) d'alerte reçoit, par exemple, la requête de demande de paramétrage des scénarii et renvoie une réponse comprenant des données représentatives des scénarii de la session. L'objet de session (100) exécute, par exemple, une fonction attribut renvoyant les références de ses objets d'analyse correspondant à ses scénarii d'analyse.

Après la réception (cond2028) de la réponse à la requête de demande de paramétrage des scénarii, le terminal exécute, par exemple, une étape suivante (ETP207) de sélection d'un scénario. Un menu interactif est par exemple réalisé à partir des données représentatives des différents scénarii pour proposer à l'utilisateur de sélectionner un scénario existant ou de créer un nouveau scénario.

Si l'utilisateur choisit (cond2071) la création d'un nouveau scénario, le terminal (ter) mobile envoie (ETP2071) par exemple, une requête de création d'un nouveau scénario. Après l'envoi (cond2072) de cette requête, le terminal (Ter) mobile exécute, par exemple, une étape (ETP2072) suivante d'attente de la réponse à sa requête. La session (100) d'alerte reçoit, par exemple, la requête de création d'un nouveau scénario et appelle par exemple, une fonction d'initialisation d'un objet d'évaluation correspondant à un nouveau scénario d'analyse. De manière non limitative, la requête de création d'un nouveau scénario comprend un nom entré précédemment à l'envoi de la requête, par l'utilisateur, ou la requête comprend des données représentatives du contexte. L'objet d'analyse créé est, par exemple, initialisé avec un attribut comprenant ce nom fourni par l'utilisateur ou ces données représentatives du contexte. Un objet d'évaluation est par exemple initialisé à partir d'une bibliothèque de classes d'objets d'évaluation, stockée en mémoire, enrichie par des classes d'objets d'évaluation experts, propres à un usage déterminé ou par des objets d'évaluation paramétrés et sauvegardés.

La fonction d'initialisation de l'objet d'évaluation retourne par exemple, une valeur de confirmation du succès de la création. Une réponse est, par exemple, envoyée par la session (100) d'alerte adressée au terminal, signifiant la confirmation de la création d'un nouveau scénario. A la réception de la confirmation de création du nouveau scénario (cond2073), le terminal (Ter) exécute, par exemple, une étape suivante (ETP208) de modification du scénario sélectionné.

Selon un autre exemple de réalisation, la création d'un nouveau scénario comprend des étapes supplémentaires de dialogue entre la session (100) d'alerte et le terminal. La session, à la réception de la requête de création d'un nouveau scénario, renvoie, par exemple, une liste de différents types de scénarii possibles. La session comprend par exemple, en mémoire, une bibliothèque de plusieurs scénarii. La bibliothèque comprend, par exemple une ou plusieurs classes d'objets d'évaluation correspondant à des scénarii d'analyse. Le terminal (Ter) recevant cette liste, réalise, par exemple, une étape de choix d'un scénario, par exemple, par un menu interactif réalisé à partir de la liste fournie par la session (100) d'alerte. Après le choix d'un scénario, une requête représentative de ce choix, est par exemple, envoyée à la session (100) d'alerte qui réalise alors la création d'un nouveau scénario.

Dans un autre cas, l'utilisateur choisit un scénario existant (cond207), à l'étape (ETP207) de sélection d'un scénario. Le terminal exécute alors l'étape (ETP208) de modification du scénario sélectionné. A l'étape (ETP207) de modification du scénario sélectionné, le terminal (Ter) propose, par exemple, par un menu interactif, le choix entre le paramétrage ou la suppression ou l'annulation du paramétrage. Un scénario créé par erreur serait, par exemple, immédiatement supprimé.

Après le choix (cond208) de la configuration du scénario sélectionné, le terminal (Ter) exécute, par exemple, une étape (ETP2081) de choix d'une fonction d'analyse, par exemple, par un menu interactif. Le menu propose, par exemple, de choisir entre plusieurs fonctions provenant d'une bibliothèque de fonctions stockée dans en mémoire permanente du terminal (Ter) mobile. La bibliothèque comprend, par exemple, des fonctions ou des programmes pour évaluer le niveau d'alerte.

De manière non limitative, un programme d'évaluation comprend plusieurs étapes d'attente conditionnelle en fonction de tests comparatifs, selon différents seuils paramétrables, pour plusieurs variables d'alerte, le dernier test du programme d'évaluation, réalisant le déclenchement d'une alerte.

Selon un autre exemple, chaque étape d'attente conditionnelle est suivie de l'activation d'une alerte distincte pour réaliser des envois d'alertes selon des niveaux d'urgence croissants. Un premier test de dépassement d'une première température paramétrable est par exemple réalisé pour activer, en cas dépassement une alerte de niveau bas. Puis un deuxième test de dépassement d'une deuxième température paramétrable peut être réalisé pour activer une alerte de niveau moyen. Enfin un dernier test de présence de gaz toxique est réalisé, pour déclencher une alerte de niveau élevé. Plusieurs programmes d'évaluation différents sont, par exemple, fournis avec des paramètres configurables initialisés par défaut.

Selon un autre exemple, la fonction d'évaluation est une fonction réalisant une opération conditionnelle sur plusieurs variables, chaque variable étant pondérée par un coefficient paramétrable. Le résultat de la fonction d'évaluation déclenche, par exemple, l'activation d'une d'alerte déterminée associée au scénario d'évaluation.

Selon un autre exemple, le choix d'une fonction d'analyse est réalisé par un dialogue entre la session (100) d'alerte et le terminal (Ter) mobile. Le terminal (Ter) envoie, par exemple, une requête de demande de données concernant les fonctions d'analyse, à la session et se place, par exemple, en attente de la réponse. La session (100) d'alerte fournit, par exemple, une réponse comprenant différentes fonctions sélectionnables correspondant à une bibliothèque mémorisée par le serveur (SAL) d'alertes. Le menu interactif de sélection d'une fonction d'analyse est, par exemple, proposé à la réception de cette réponse.

Après l'enregistrement (cond2081) de la fonction ou du programme d'évaluation choisi, dans une mémoire temporaire du terminal (Ter), le terminal (Ter) exécute, par exemple, une étape suivante (ETP2082) de paramétrage de la fonction ou du programme d'évaluation. Un menu interactif propose, par exemple, à l'utilisateur de rentrer les différents paramètres de la fonction d'évaluation.

Après l'enregistrement des paramètres de configuration (cond2082), dans une mémoire temporaire du terminal (Ter), le terminal (Ter) exécute, par exemple, une étape (ETP2083) d'association d'une ou plusieurs alertes activées selon le scénario sélectionné. Cette étape permet notamment de choisir l'alerte activée selon les différents scénarii. De manière non limitative, cette étape de sélection des alertes déclenchées comprend un dialogue entre le terminal (Ter) et la session d'alerte. Le terminal (Ter) envoie, par exemple, une requête de demande de données concernant les alertes de la session et se place en attente de la réponse de la session. La session d'alerte reçoit, par exemple, cette requête et exécute une fonction attribut renvoyant les références des objets d'alertes de la session. Une réponse comprenant les références des alertes de la session est par exemple, renvoyée au terminal, le terminal affichant alors un menu interactif de sélection.

Après l'enregistrement (cond2083) de la ou des alertes associées, dans une mémoire temporaire du terminal (Ter) mobile, le terminal (Ter) exécute, par exemple, une étape (ETP2084) suivante d'initialisation des entrées de la fonction d'évaluation. La fonction ou le programme d'évaluation réalise en effet un calcul en fonction des valeurs d'une ou plusieurs des variables d'alerte (V01, V02, V03). La définition des entrées permet, par exemple, à l'utilisateur d'utiliser n'importe quelle variable correspondant, par exemple, à un capteur. La donnée représentative d'un paramètre à surveiller, est par exemple mise en forme par un objet de surveillance et pondérée par la fonction d'évaluation, par exemple, si le capteur n'est pas un capteur standard.

De plus les paramètres d'une fonction ou d'un programme d'évaluation peuvent être modifiés de façon automatique pour réaliser un paramétrage plus précis, suite par exemple, à un déclenchement excessif détecté (cond0132).

De manière non limitative, un dialogue est établi entre le terminal (ter) et la session d'alerte, pour l'initialisation des paramètres d'entrée de la fonction ou du programme d'évaluation. Le terminal (Ter) envoie, par exemple, une requête de demande d'information concernant les variables d'alertes et se place en attente de la réponse de la session d'alerte. La session d'alerte renvoie, par exemple, en réponse à cette requête, des données représentatives de ses variables d'alerte. L'objet de session exécute, par exemple, une fonction attribut renvoyant les références des variables d'alerte de la session, ces références étant transmises ensuite dans la réponse à la requête du terminal. Le terminal (Ter) recevant les références des variables de la session, propose la sélection d'une ou plusieurs de ces variables, par exemple, par un menu interactif.

Après l'enregistrement (cond2084) de données représentatives des variables d'entrée associées à la fonction ou au programme d'évaluation, dans une mémoire temporaire du terminal (Ter), le terminal (Ter) exécute, par exemple, une étape (ETP2085) de réglage du scénario. Le terminal (Ter) envoie, par exemple, une requête de réglage du scénario à la session d'alerte. La requête de réglage du scénario comprend, de manière non limitative, des données représentatives :
- de la fonction ou du programme d'analyse,
- des paramètres de la fonction ou du programme d'analyse,
- d'une ou plusieurs alertes associées au scénario d'analyse, ou
- une ou plusieurs variables d'entrée associées à la fonction d'analyse.

Les données insérées dans la requête de réglage du scénario proviennent, par exemple, de la mémoire temporaire du terminal (Ter).

Après l'envoi (cond2085) de la requête de réglage du scénario, le terminal (ter) mobile exécute, par exemple, une étape (ETP2086) suivante d'attente de la réponse à sa requête. La session (100) d'alerte reçoit, par exemple, la requête de réglage du scénario et règle, par exemple, un objet d'analyse correspondant, en fonction des données transmises dans la requête. Le réglage est par exemple réalisé par une fonction attribut de l'objet d'analyse, cette fonction renvoyant, par exemple, une donnée représentative d'un succès du réglage, transmise en réponse à la requête du terminal (Ter).

A la réception de la donnée représentative d'un réglage réussi du scénario correspondant ; par exemple, à un objet d'analyse, le terminal (Ter) exécute, par exemple, l'étape (ETP210) suivante durant laquelle les données temporaires de paramétrage sont supprimées et durant laquelle un menu interactif propose, à l'utilisateur de quitter le paramétrage (cond2102) ou de réaliser un autre paramétrage (cond2101).

Un exemple de suppression d'un scénario va maintenant être décrit. Lors d'une étape (ETP208) de modification du scénario sélectionné, l'utilisateur peut, par exemple, choisir la suppression (cond2087) du scénario sélectionné. Après le choix (cond2087) de la suppression, le terminal (Ter) exécute, par exemple, une étape suivante (ETP2087) proposant de sauvegarder le scénario avant sa suppression. Le terminal (Ter) affiche, par exemple, un menu interactif pour que l'utilisateur entre son choix via l'interface (IHM) utilisateur.

Dans le cas où l'utilisateur entre le choix de confirmer directement la suppression (cond20871), une étape (ETP20871) de suppression du scénario est, par exemple, exécutée par le terminal (Ter) mobile.

Dans le cas où l'utilisateur entre le choix de sauvegarder le scénario (cond20872), le terminal (Ter) exécute, par exemple, une étape (ETP20872) d'envoi d'une requête de sauvegarde du scénario. De manière non limitative, la session recevant cette requête exécute un enregistrement de données représentatives du scénario sélectionné, dans une bibliothèque de scénarii. L'objet de surveillance correspondant au scénario sélectionné est, par exemple, associé à un nom entré par l'utilisateur ou à des données représentatives du contexte, pour pouvoir être utilisés lors de l'initialisation. La bibliothèque de d'objet d'évaluation peut ainsi être enrichie par des objets configurés au cas par cas. L'objet d'évaluation nouvellement stocké est par exemple, associé à un nom d'évaluation, entré par l'utilisateur, ou à un contexte du dispositif portable de communication, utilisés, par exemple lors de l'initialisation.

Après la sauvegarde du scénario en mémoire (cond20873), le terminal (Ter) exécute, de manière non limitative, l'étape (ETP20871) de demande de suppression du scénario.

Durant l'exécution de l'étape (ETP20871) de demande de suppression du scénario, le terminal (Ter) envoie, par exemple, une requête de suppression du scénario sélectionné, à la session (100) d'alerte. Après l'envoi (cond20874) de la requête de suppression du scénario, le terminal (Ter) exécute, par exemple, une étape suivante (ETP20873) d'attente de la réponse de la session (100) d'alerte. La session (100) d'alerte reçoit, par exemple, la requête de suppression du scénario comprenant la référence du scénario sélectionné, puis exécute, par exemple une fonction de suppression de l'objet d'analyse correspondant. La fonction de suppression de l'objet d'analyse renvoie, par exemple, une donnée représentative du succès ou de l'échec de la suppression, transmise en réponse à la requête envoyée par le terminal (Ter).

Un scénario d'évaluation peut ainsi être sauvegardé dans une bibliothèque et permet, par exemple, à l'utilisateur de supprimer un scénario de l'ensemble de scénarii exécutés simultanément pour une session (100) d'alerte déterminée, tout en conservant ce modèle de scénario, par exemple pour d'autres sessions (100) d'alerte.

Après la réception (cond20875), par le terminal (Ter), de la réponse confirmant la suppression du scénario, le terminal (Ter) exécute, par exemple, l'étape (ETP210) suivante durant laquelle les données temporaires de paramétrage sont supprimées et durant laquelle un menu interactif propose, à l'utilisateur de quitter le paramétrage (cond2102) ou de réaliser un autre paramétrage (cond2101).

L'ordre des commandes de paramétrage d'un objet d'évaluation ou de commande d'archivage de ces objets ou d'initialisation d'un nouvel objet d'évaluation précédemment décrit, n'est pas limitatif. Ces commandes peuvent, par exemple, être exécutées seules ou dans un ordre différent. Une commande d'archivage pourra par exemple, être exécutée seule pour enrichir la bibliothèque par des objets d'évaluation paramétrés. D'autre part les commandes peuvent être exécutées automatiquement par l'objet d'apprentissage de la session ou à distance par le serveur de sécurité.

L'objet (106) d'apprentissage dont la fonction d'adaptation automatique est activée, pourra par exemple modifier un objet d'évaluation pour prendre en compte une entrée supplémentaire. L'examen, par le module d'apprentissage, des séquences d'évènement informatiques comprenant des données représentatives de sons enregistrés, révèle par exemple, qu'un cri avec un volume sonore supérieur à un seuil déterminé, a été poussé. Cet évènement non prévu initialement dans le ou les scénarii de la session, est par exemple, introduit par une modification d'un objet d'évaluation. L'objet d'évaluation modifié a par exemple, une entrée supplémentaire, ou en remplacement d'une précédente, correspondant aux sons perçus. Les sons perçus sont, par exemple, comparés à un ensemble de sons reconnaissables ou sont traités selon leur volume sonore.

Dans le cas d'une plateforme associée à plusieurs terminaux, un évènement détecté par un terminal peut impliquer une modification, par l'objet d'apprentissage, de la session. Une combinaison d'évènements détectés sur plusieurs terminaux peut aussi être prise en compte pour une adaptation automatique de la session.

Un exemple non limitatif de déclenchement d'alerte va maintenant être décrit, en référence à la figure 4.

A la fin du paramétrage (cond2102) d'une session d'alerte comprenant un ou plusieurs scénarii d'évaluation associés à une ou plusieurs alertes et à un ou plusieurs déclencheurs, les objets d'évaluation de la session (100) d'alerte sont, par exemple, activés (ETP211). De manière non limitative, l'activation est réalisée de façon automatique par un programme du serveur (SAL) d'alertes ou par un serveur distant.

Selon un autre exemple de réalisation, l'activation est commandée par l'utilisateur actionnant une commande de son terminal (Ter) mobile. Le terminal (Ter) envoie par exemple, une requête de demande d'activation des évaluations d'une session d'alerte et se place en attente d'une réponse de confirmation. Les objets d'évaluation de la session (100) d'alerte adressée sont, par exemple, activés lors de la réception de la requête d'activation et renvoie, en réponse, une donnée représentative de leur état activé. De manière non limitative, la session (100) d'alerte renvoie aussi un programme d'évaluation du niveau d'urgence ou une mise à jour du programme d'évaluation d'urgence à exécuter par le terminal (Ter) mobile.

Selon un exemple non limitatif de réalisation, l'activation des objets d'évaluation de la session, comprend une étape (ETP0211) de paramétrage préliminaire, permettant de régler des paramètres d'objets d'évaluation, de surveillance ou d'alerte. Ce paramétrage préliminaire réalisé juste avant l'activation des objets d'évaluation, permet notamment de régler un ou plusieurs paramètres précisant le contexte d'utilisation. Après l'entrée (cond0211) de ces paramètres, les paramètres des objets concernés sont enregistrés à l'étape suivante (ETP0212). Après l'enregistrement (cond0212) des paramètres, l'activation des objets d'évaluation est commandée à l'étape suivante (ETP0213). De cette façon, un enfant surveillé lors d'un trajet, pourra paramétrer la sécurisation de son trajet. L'enfant pourra, par exemple, choisir ce jour là :
- de prévenir son père par un courrier électronique, sur son ordinateur de bureau, en cas de problème ou,
- de prévenir sa mère par un message texte, de type SMS, sur son téléphone cellulaire, en cas de problème ou,
- de paramétrer la durée du trajet en fonction d'une destination proposée via l'interface (IHM) utilisateur.

Après la réception (cond211) d'un message de la session signifiant l'activation de ses objets d'évaluation, le terminal (Ter) exécute, par exemple, une étape (ETP212) d'évaluation du niveau d'urgence. Le ou les scénarii d'analyse sont, en effet, appliqués pour détecter si une condition de déclenchement d'une alerte est présente. Le terminal (Ter) envoie, par exemple, de façon périodique des données représentatives de l'état de ses capteurs, adressées à la session (100) d'alerte.

De manière non limitative, la session (100) d'alerte envoie un message d'avertissement au terminal (Ter), lors de la détection d'un état d'urgence, avant d'envoyer un message représentatif du déclenchement d'une alerte.

Lors de la réception (cond212) par le terminal (Ter) d'un message représentatif d'un avertissement, le terminal (Ter) affiche (ETP213), par exemple, un menu interactif proposant, par exemple, d'annuler (cond2132) l'état d'urgence ou de confirmer (cond2131) l'état d'urgence.

Si l'utilisateur annule l'état d'urgence (cond2132) par exemple, par l'appui sur une combinaison déterminée de touches, le terminal (Ter) exécute, par exemple, une étape (ETP217) suivante de modification des paramètres de l'objet d'évaluation. Une requête de modification de l'objet d'évaluation est par exemple envoyée à la session (100) d'alerte.

Après l'envoi de cette requête (cond217), le terminal (Ter) exécute, par exemple, une étape (ETP218) d'attente de la réponse de la session (100) d'alerte. La session (100) d'alerte reçoit, par exemple, la requête de modification de l'évaluation et règle, par exemple, un paramètre de l'objet d'évaluation en cause dans le déclenchement de l'envoi du message d'avertissement. Ce paramètre est par exemple modifié pour augmenter la plage de tolérance avant déclenchement d'une alerte. De manière non limitative, les objets d'évaluations sont désactivés pour être réglés par l'objet (106) d'apprentissage, avant d'être immédiatement réactivés. Après le réglage d'un ou plusieurs paramètres, la session d'alerte renvoie une réponse à la requête de modification de l'évaluation, confirmant le réglage.

Après la réception (cond218) du message de confirmation du réglage de l'évaluation, le terminal exécute, par exemple, à nouveau, l'étape (ETP212) d'évaluation du niveau d'urgence.

Dans un autre cas, à l'étape (ETP213) d'affichage d'un menu interactif proposant d'annuler ou de confirmer l'état d'urgence, si une confirmation (cond0131) d'urgence est réalisée par l'utilisateur, le terminal (Ter) mobile, exécute, par exemple, une étape (ETP214) d'envoi d'une requête de confirmation de l'état d'urgence.

Selon un exemple de réalisation, la confirmation de l'état d'urgence est réalisée par l'appui sur une touche de confirmation ou par l'écoulement d'une temporisation déterminée, durant laquelle aucune action d'annulation de l'utilisateur n'est détectée par l'interface utilisateur. La temporisation peut aussi être réalisée par un objet de surveillance. De cette façon malgré une destruction du terminal (Ter) ou une dégradation du terminal (Ter), la session (100) d'alerte peut toujours déclencher une alerte.

De manière non limitative, après l'envoi (cond214) de la requête de confirmation de l'état d'urgence, à la session (100) d'alerte, le terminal (Ter) exécute, par exemple, une étape (ETP2141) suivante d'attente de la réponse de la session (100) d'alerte. La session d'alerte reçoit, par exemple, la requête de confirmation de l'état d'urgence et déclenche l'alerte pour laquelle l'utilisateur avait été prévenu. De manière non limitative, l'objet d'alerte activé transmet une réponse au terminal (Ter) comprenant une commande du terminal (Ter) dans un mode d'urgence.

A la réception de la réponse (cond2141) à sa requête, le terminal est, par exemple, commandé dans un mode d'urgence. Le mode d'urgence comprend, par exemple, la transmission de données produites par des capteurs communiquant avec le terminal ou intégrés au terminal, comme par exemple son interface utilisateur. Le mode d'urgence bloque, par exemple, aussi des fonctions du terminal, empêchant, par exemple, son utilisation pour établir une communication ou utiliser des programmes du terminal. Dans le cas d'un téléphone portable, le mode d'urgence empêche, par exemple, de recevoir ou d'initialiser des appels téléphoniques ou de consulter les données stockées dans le terminal ou encore de prendre des photos avec la caméra.

Le terminal (Ter) se place, par exemple, dans l'attente d'un déblocage. De manière non limitative, le déblocage est réalisé par l'utilisateur, via l'interface utilisateur ou à distance par la réception d'une commande de déblocage, provenant, par exemple, de la session d'alerte ou du serveur de sécurité. Un message est, par exemple, affiché à l'écran pour inviter l'utilisateur à entrer un code secret, tandis que les fonctions, par exemple liées à la téléphonie, sont interdites dans cet état d'urgence.

Une sortie de l'état d'urgence (cond015) est par exemple réalisée lorsque l'utilisateur entre son code secret au clavier ou réalise une autre procédure de sortie d'état d'urgence. De manière non limitative, la détection (cond015) de la sortie d'état d'urgence, est suivie d'une étape (ETP016) d'envoi d'une requête de désactivation de la session (100) d'alerte pour sortir du mode de surveillance.

De façon avantageuse, la fonction d'adaptation automatique de l'objet (106) d'apprentissage, permet au système d'alerte de prendre en compte des événements non préprogrammés par l'utilisateur ou des événements non prévus par un fabriquant. L'objet (106) d'apprentissage enregistre, en effet des séquences d'événement informatiques qui constituent une base de connaissance capitalisant de l'expérience. De cette façon, le système d'alerte n'est pas limité, dans ses programmes d'évaluation, à un arbre figé d'événements successifs, mais l'arbre des événement peut évoluer en prenant en considération une nouvelle entrée surveillée. Des programmes d'examen des séquences d'événements informatiques pourront être fournis par un fabriquant, pour un usage déterminé, puis être mis à jour, pour profiter de l'expérience acquise par le système d'alerte comprenant, par exemple, la plateforme en communication avec des terminaux. Les mises à jour peuvent aussi provenir d'un serveur distant prenant en compte les évolutions de plateformes ou de sessions similaires.

Un exemple de terminal en situation de mobilité, va maintenant être décrit. De manière non limitative, le terminal (Ter) mobile est par exemple un téléphone mobile ou ordinateur personnel de type PDA ou un ordinateur comprenant une carte d'accès au réseau de téléphonie mobile. La figure 3 représente un exemple non limitatif d'un terminal (Ter) mobile de télécommunication, comme par exemple un téléphone cellulaire. Le terminal mobile comprend, par exemple, une unité de calcul (PTer) en communication via un bus (B1) de données, avec la mémoire (MTer) du terminal (Ter) mobile et avec plusieurs interfaces (I1, I2, I3, I4, I5, I6, I7, I8) de communication. De plus, différents éléments constituent une interface (IHM) de communication avec l'utilisateur.

Le terminal mobile comprend, par exemple, un composant (CTer) de communication réalisant, par exemple, une modulation lors d'une émission ou réalisant une démodulation lors d'une réception. Les moyens de communication radio réalisent la transformation de signaux électriques en ondes radio lors de l'émission ou la transformation de signaux radio en signaux électriques, lors de la réception. Le composant (CTer) de communication communique, par exemple, avec les moyens (PTer) de traitement et les moyens (MTer) de mémorisation. De manière non limitative la communication par les ondes radio est réalisée selon le protocole GSM (Global System for Mobile Communications), GPRS (Global Packet Radio Service), UMTS (Universal Mobile Telecommunications System) ou HSDPA (High Speed Downlink Packet Access). Le type de modulation est, par exemple, du type W-CDMA (Wideband Code Division Multiple Access) comme pour le protocole UMTS ou de type AMRT (Accès Multiple à Répartition dans le Temps) combiné à AMRF (Accès Multiple à Répartition de fréquence) comme pour le protocole GSM.

Chacun des composants du terminal (Ter) mobile, à l'exception de l'unité de calcul, est contrôlé par un dispositif de contrôle non représenté ou par l'unité de calcul. L'unité (PTer) de calcul, par exemple un circuit intégré de type ASIC ou composant programmable de type FPGA ou un microprocesseur, traite des données sous forme numériques. Les moyens de traitement sont, par exemple, aussi réalisés par l'unité de calcul.

De manière non limitative, le terminal mobile (Ter) comprend un second circuit (R2) d'émission et de réception, pour établir une communication par ondes radiofréquences, comme par exemple Wi-Fi ou Bluetooth®, ou par liaison optique. Le second circuit (R2) d'émission et de réception comprend, par exemple, un émetteur et un récepteur radiofréquence ou infrarouge. Le second circuit (R2) d'émission et de réception communique, via une interface (I7) associée, avec le bus (B1) qui communique avec l'unité (PTer) de calcul et la mémoire. L'interface (I7) réalise par exemple, une conversion de données numériques provenant du bus, en données analogiques transmises au second circuit (R2) d'émission et de réception, pour être transformées en ondes radiofréquences ou en ondes lumineuses. Les ondes radiofréquences ou lumineuses reçues, par exemple, par le second circuit (R2) d'émission et de réception, sont transformées en signaux électriques analogiques, convertis, par l'interface associée en données numériques. D'autre part, l'unité (PTer) de calcul exécute, par exemple, un programme d'interface déterminé pour établir la communication, par exemple, selon le protocole Wi-Fi ou Bluetooth®. Le dispositif peut ainsi être connecté directement au réseau Internet ou à un réseau local, par exemple, pour transmettre un courrier électronique ou adresser une requête à un serveur déterminé.

De manière non limitative, un connecteur (LIN) permet de brancher un ou plusieurs capteurs ou dispositifs de contrôle ou de mesure, transmettant des signaux numériques ou analogiques à l'interface (I6) associée qui transmet, d'autre part, des données numériques représentatives des signaux reçus, à l'unité de calcul (PTer), pour être traitées ou stockées en mémoire (MTer). Le connecteur (LIN) communique, par une interface (16) avec le bus (B1) du dispositif de communication. L'interface (I6) du connecteur est par exemple, réalisée pour transmettre ou recevoir des données numériques ou analogiques selon un protocole de communication déterminé.

Selon un exemple non limitatif, un capteur biométrique est relié au connecteur (LIN) et transmet des signaux représentatifs d'un paramètre biométrique mesuré, comme par exemple, le rythme cardiaque ou d'autres caractéristiques biologiques de l'utilisateur.

Selon un exemple non limitatif, un capteur de température ou un capteur d'humidité ou un analyseur chimique ou un autre capteur est relié au connecteur (LIN) et transmet des signaux représentatifs de caractéristiques environnementales de l'utilisateur.

Selon un exemple non limitatif, un capteur de position est relié au connecteur (LIN) et transmet des signaux représentatifs de la position du buste ou de la tête de l'utilisateur, utilisé, par exemple, pour la détection d'une chute de l'utilisateur.

De manière non limitative, le terminal (Ter) de communication comprend un dispositif de localisation (LOC) géographique, communiquant, via son interface associée (I8), avec le bus (B1) en communication avec l'unité (PTer) de calcul et la mémoire (MTer). Le dispositif de localisation (LOC) transmet, par exemple, des données représentatives de la position géographique du terminal (Ter) mobile. Le dispositif de localisation est, par exemple, un dispositif de type GPS (Global Positioning System) qui permet, en liaison avec un «système satellite», de déterminer une localisation géographique correspondant, par exemple, à la longitude et la latitude du terminal (Ter) mobile ou correspondant à une adresse postale ou une localisation sur un plan de ville ou une carte routière. Le composant GPS produit, par exemple, des informations de localisation géographique sous forme numérique. De manière non limitative, les informations de localisation géographique sont placées dans une zone mémoire (TMP) ou sont traitées par l'unité de calcul.

De manière non limitative, la mémoire (MTer) est divisée en plusieurs zones comme par exemple, une zone (PRG) réservée aux programmes, une zone (DATA) de stockage de données, une zone (VAR) réservée pour des variables et une zone (TMP) tampon ou de stockage temporaire. Le dispositif de communication comprend, par exemple, plusieurs modules logiciels activés en même temps et communiquant entre eux. Des programmes sont exécutés pour l'activation des modules logiciels qui réalisent, par exemple, des lectures ou des écritures dans les différentes zones mémoires ou directement dans les différentes interfaces (I1, I2, I3, I4, I5, I6, I7, I8) communiquant avec le bus (B1). Le terminal (Ter) mobile comprend, par exemple, un programme, de d'envoi de données résidant en mémoire. Ce programme est, par exemple, exécuté pour configurer, démarrer, poursuivre ou arrêter une surveillance d'éléments indicatifs d'une situation d'urgence nécessitant une procédure d'urgence.

Différents éléments constituant de manière non limitative, une interface (IHM) de communication avec l'utilisateur vont maintenant être décrits. Un terminal (Ter) mobile comprend, par exemple, un microphone (MIC) d'enregistrement de la voix de l'utilisateur, un haut-parleur (HP), un écran (DISP) d'affichage et un clavier (KB). Chacun des éléments (HP, MIC, DISP et respectivement KB) de l'interface utilisateur est, de manière non limitative, en communication avec le bus (B1) de données, via une interface (I3, I4, I2 et respectivement I1) de communication. L'interface utilisateur est, par exemple, pilotée par un programme résidant en mémoire, pour réaliser différentes actions de façon conditionnelle, en fonction des données entrées par l'interface utilisateur.

L'interface (I3) du haut-parleur reçoit, par exemple, des données numériques représentatives d'un signal sonore et les transforme en signaux électriques analogiques reçus par le haut-parleur (HP). Ces signaux électriques analogiques sont alors transformés en signaux sonores par le haut-parleur.

L'appui par l'utilisateur, sur une ou plusieurs touches déterminées du clavier (KB), crée, par exemple, un signal électrique représentatif, transformé en signaux numériques par son interface (I1) et transmis aux moyens de traitement (PTer). Les données numérisées sont, par exemple, stockées en mémoire (MTer) et correspondent par exemple à une chaîne de caractères ou à une fonction prédéfinie dans un environnement donné. Par exemple un appui simultané sur plusieurs touches déterminées du clavier (KB) par l'utilisateur, implique un signal déterminé transmis par l'interface (I1) pour être stocké en mémoire (MTer) et comparé, par les moyens de traitement, avec des données, correspondant à des commandes prédéfinies, mémorisées dans le programme en cours d'exécution.

L'appui sur certaines touches déterminées du clavier (KB), implique, par exemple, la transmission par l'interface (I1) du clavier (KB) d'un signal numérique interprété par les moyens (PTer) de traitement comme des commandes de déplacement vertical ou horizontal sur l'écran (DISP). L'appui sur une autre touche déterminée du clavier (KB) implique, par exemple, la transmission par l'interface (I1) du clavier (KB) d'un signal interprété par les moyens (PTer) de traitement comme une commande de validation ou respectivement d'options, l'appui étant alors équivalent à un clic gauche ou respectivement droit d'une souris. Ainsi les touches de validation et d'option, associées aux touches de déplacement, permettent de réaliser des actions similaires à celles réalisées par une souris.

Le microphone (MIC) produit, par exemple, un signal électrique analogique représentatif d'un signal sonore. Le signal électrique analogique est transformé, par l'interface (I4) du microphone, en un signal numérique représentatif, transmis par le bus (B1) et stocké en mémoire (MTer) ou lu par les moyens (PTer) de traitement.

L'interface (I2) associée à l'écran (DIPS) d'affichage, commandée par les moyens de traitement (PTer), effectue, par exemple, une lecture dans un espace mémoire déterminé de la mémoire (MTer), correspondant aux données représentatives de l'image affichée à l'écran (DISP).

De manière non limitative, le dispositif de communication, supportant par exemple la visioconférence, est équipé d'une caméra (CAM) en communication, par son interface (15), avec le bus (B1) de données et de contrôle. La caméra (CAM) est par exemple commandée par l'unité (PTer) de calcul, des données représentatives d'images capturées par la caméra étant par exemple, stockées dans un espace (TMP) mémoire déterminé, pour être traitées par les moyens de traitement.

Les signaux électriques produits par la caméra (CAM) sont, par exemple, des signaux numériques. L'interface (I5) associée à la caméra (CAM) du terminal (Ter) mobile, transmet les signaux numériques représentatifs d'une image au bus (B1), qui sont stockés par les moyens (PTer) de traitement dans un espace mémoire déterminé. Un ensemble de données numériques représentatives d'une ou plusieurs images est par exemple compressé par les moyens de traitement puis envoyé par les moyens (CTer) de communication, dans un flux de données, pour des applications vidéo, comme par exemple la vidéoconférence.

L'architecture du terminal en situation de mobilité ne se limite pas aux exemples précédemment cités. Ainsi le terminal mobile peut être disposé dans un véhicule, tel qu'une automobile, comprenant ses propres capteurs reliés au terminal. Le terminal en situation de mobilité peut aussi passer d'un type de réseau à un autre, pour établir une communication.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'alerte exécuté par une plafeforme (4) de sécurité dans un premier réseau, comprenant au moins une première passerelle (Gat) de communication avec au moins un premier terminal (Ter) en situation de mobilité, par un second réseau de télécommunication, **caractérisé en ce qu'**il comprend au moins :
- une étape d'établissement d'une communication entre le premier terminal (Ter) et la plateforme (4) de sécurité, comprenant l'envoi, par le premier terminal, de données représentatives d'un contexte d'utilisation déterminé comprenant au moins des données représentatives d'au moins un état d'au moins un capteur du premier terminal,
- une étape d'initialisation d'au moins une session (100) d'alerte, de la plateforme, initialisée en fonction du contexte d'utilisation, la session d'alerte comprenant au moins un module (C102) d'évaluation évaluant au moins une première variable d'alerte associée au premier terminal,
- une étape d'initialisation d'un premier module de surveillance de la plateforme, initiatisé en fonction du contexte, le premier module de surveillance réglant la première variable d'alerte évaluée dans un état représentatif de l'état d'un capteur du premier terminal,
- une étape d'initialisation d'au moins un module (102) d'émission d'alerte, associé au contexte, commandé en fonction du module d'évaluation et déclenchant, lors de son activation, au moins l'envoi d'un message d'alerte, par un dès réseaux, vers un serveur (Ser) du réseau,
- une étape d'activation de la session d'alerte et de son module (C102) d'évaluation, réalisée concomitante au stockage, par un module (106) d'apprentissage, de séquences d'événements informatiques représentatives des états des modules d'évaluation, de surveillance et d'émission d'alerte, en concordance de phase avec les états de l'au moins une première variable d'alerte,
- une étape d'envoi de données de réglage de la première variable d'alerte évaluée, par le premier terminal exécutant un premier programme d'envoi de données,
- une étape d'activation du module d'émission d'alerte lorsque le module d'évaluation détecte un état d'urgence, la première variable d'alerte étant réglée dans un état représentatif d'un état d'urgence.

2. Procédé d'alerte selon la revendication 1, **caractérisé en ce qu'**il comprend au moins :
- une étape d'établissement d'une communication entre la plateforme (4) de sécurité et au moins un second terminal (Ter) en situation de mobilité communiquant par un troisième réseau avec une seconde passerelle de la plateforme, cette étape étant concomitante à l'étape d'établissement de la communication entre le premier terminal et la plateforme,
- une étape d'association de la session (100) d'alerte et de son module (C102) d'évaluation avec le second terminal, suivant l'étape d'initialisation de la session (100) d'alerte, le module d'évaluation évaluant la première variable d'alerte est au moins une seconde variable d'alerte associée au second terminal,
- une étape d'initialisation d'un second module de surveillance associe au contexte, précédant l'étape d'activation de la session d'alerte et de son module d'évaluation, le second module de surveillance réglant la seconde variable d'alerte évaluée dans un état représentatif de l'état d'un capteur du second terminal,
- une étape d'envoi de données de réglage de la seconde variable-d'alerte évaluée, par le second terminal exécutant un second programme d'envoi de données, suivant l'étape d'activation de la session d'alerte et de son module d'évaluation.

3. Procédé d'alerte selon là revendication 2 **caractérisé en ce que** l'étape (ETP211) d'activation du module d'évaluation est suivie d'une étape de transmission, de la plateforme (4) au premier et respectivement au second terminal (Ter), du premier et respectivement du second programme d'envoi de données ou d'une mise à jour du premier et respectivement du second programme d'envoi de données.

4. Procédé d'alerte selon l'une des revendications 1 à 3, **caractérisé en ce que** l'étape d'établissement de la communication entre le premier terminal (Ter) et la plateforme (4) de sécurité comprend l'envoi, par le premier terminal, d'une requête de demande de création de la session (100), comprenant les données représentatives du contexte,
et **en ce que** l'étape d'initialisation de la session (100) d'alerte et de son module d'évaluation, l'étape d'initialisation du module de surveillance ou l'étape d'initialisation du module d'émission d'alerte est réalisée en fonction d'au moins une des données représentatives du contexte, comparée avec des données d'initialisation associées à des modules d'une bibliothèque.

5. Procédé d'alerte selon les revendications précédentes, **caractérisé en ce qu'**une variable d'alerte est une variable binaire ou une variable représentative d'un entier ou d'un réel ou un tableau d'entiers ou de réels, utilisées comme entrée d'une fonction évaluant un niveau d'alerte.

6. Procédé d'alerte selon la revendication 4, **caractérisé en ce que** la donnée représentative du contexte est une variable d'alerte, représentative de l'état d'un des capteurs.

7. Procédé d'alerte selon la revendication 4 à 6, **caractérisé en ce qu'**il comprend une étape d'archivage du module d'évaluation, du module de surveillance ou respectivement du module d'émission (102) d'alerte comprenant le stockage de données représentatives, du module d'évaluation, du module de surveillance ou respectivement du module d'émission d'alerte, associé à des données représentatives du contexte.

8. Procédé d'alerte selon l'une des revendications 1 à 7, **caractérisé en ce que** l'étape d'initialisation d'un des modules d'évaluation, de surveillance ou d'émission d'alerte, est suivie d'une étape de réglage de ce module, en fonction de :
- une requête de paramétrage manuel provenant du premier terminal (Ter) et entrée par une interface utilisateur du premier terminal, ou
- une requête de paramétrage à distance provenant d'un serveur de paramétrage extérieur à la plateforme,
- une commande de paramétrage automatique produite par le module d'apprentissage.

9. Procédé d'alerte selon la revendication 8, **caractérisé en ce que** la commande de paramétrage automatique est produite par le module d'apprentissage en fonction :
- des séquences d'événements informatiques examinées par le module d'apprentissage, ou
- d'une annulation de l'état d'urgence entrée par l'interface utilisateur du premier terminal.

10. Procédé d'alerte selon la revendication 8 ou 9, **caractérisé en ce que** l'étape de réglage du module d'évaluation comprend
- un choix d'un programme d'évaluation dans une bibliothèque de programmes, ou
- un paramétrage du programme d'évaluation choisi, ou
- une association d'un ou plusieurs modules d'émission d'alerte commandés en fonction de l'évaluation, ou
- un réglage d'une ou plusieurs références de variables d'alerte lues en entrée du programme d'évaluation.

11. Procédé d'alerte selon l'une des revendications 8 à 10, **caractérisé en ce que** l'étape de réglage du module de surveillance comprend :
- un réglage d'une référence d'un capteur surveillé, ou
- un choix d'une fonction de traitement préliminaire réglant la variable d'alerte, ou
- un paramétrage de la fonction de traitement préliminaire, ou
- un réglage d'une temporisation de déclenchement d'alerte.

12. Procédé d'alerte selon l'une des revendications 8 à 11, **caractérisé en ce que** l'étape de réglage du module d'émission (102) d'alerte comprend :
- un choix d'un type de message d'alerte, ou
- un réglage d'un contenu du message d'alerte, ou
- un réglage d'au moins une référence de variable (V01, V02, V03) d'alerte ou de séquence d'événements informatiques insérée au contenu du message d'alerte envoyé, lors de l'activation du module d'émission d'alerte, ou
- un réglage d'une destination du message d'alerte, ou
- un réglage de paramètres de déblocage ou de sortie d'un état d'alerte.

13. Procédé d'alerte selon l'une des revendications 8 à 12, **caractérisé en ce que** l'étape d'activation du module d'évaluation de la session correspondant au contexte, est précédée d'une étape préalable de réglage d'au moins un des modules d'évaluation, de surveillance ou d'émission d'alerte, le réglage étant réalisé automatiquement par le module d'apprentissage ou manuellement par l'interface utilisateur du premier terminal.

14. Procédé d'alerte selon l'une des revendications 8 à 13, **caractérisé en ce que** l'étape d'activation du module d'émission d'alerte est suivie d'au moins :
- une étape de désactivation du module (C102) d'évaluation de la session correspondant au contexte,
- une étape de réglage automatique du module d'évaluation ou d'un des modules associés au contexte, par le module (106) d'apprentissage,
- une nouvelle étape d'activation du module (C102) d'évaluation.

15. Procédé d'alerte selon la revendication 14, **caractérisé en ce que** l'étape de désactivation du module d'évaluation est précédée d'au moins :
- une étape d'envoi d'un message d'avertissement, via l'interface utilisateur du premier terminal,
- une étape d'attente d'une requête d'annulation de l'état d'urgence, entrée par l'interface utilisateur,
- une étape de réception de la requête d'annulation suivie de l'étape de désactivation du module (C102) d'évaluation.

16. Procédé d'alerte selon l'une des revendications 1 à 15, **caractérisé en ce que** le module d'évaluation exécute au moins
- une étape de temporisation avant validation de l'état d'urgence, débutant au dépassement d'un seuil paramétrable, par la ou une des variables évaluées, la fin de la temporisation validant l'état d'urgence ou la temporisation s'interrompant dans le cas d'un passage de la variable évaluée en dessous du seuil.

17. Système d'alerte comprenant une plateforme dans un premier réseau, équipée d'au moins, une première passerelle de communication avec au moins un premier terminal (Ter) en situation de mobilité, par un second réseau de télécommunication, un serveur d'alertes comprenant des moyens de traitement et des moyens de mémorisation agencés de façon à communiquer au moins, via la première passerelle, avec le premier terminal (Ter), pour l'émission ou la réception de données,
**caractérisé en ce que** les moyens de traitement associés aux moyens de mémorisation sont agencés de façon à réaliser au moins :
une session (100) d'alerte, initialisée en fonctions d'un contexte d'utilisation comprenant au moins des données représentatives d'au moins un état d'au moins un capteur du premier terminal, la session d'alerte comprenant au moins un module (C102, C1021) d'evaluation, commandé dans un état actif ou dormant et évaluant au moins une première variable d'alerte associée au premier terminal, la sessions d'alerte commandant le réglage d'un module (106) d'apprentissage qui mémorise des séquences d'événements informatiques représentatives des états des modules, de surveillance, d'évaluation et d'émission d'alerte, en concordance de phrase avec les états (V01, V02, V03) de l'au moins une première variable d'alerte,
la première variable d'alerte évaluée étant réglée dans un état représentatif d'un capteur du premier terminal, par un premier module (M01, M02, M03) de surveillance initiasse en fonction du contexte,
le premier terminal transmettant des données représentatives de l'état du capteur du premier terminal, au premier module de surveillance réglant la première variable d'alerte évaluée, en fonction de ces données transmises
le module d'évaluation, dans son état actif commandant l'activation du module d'émission d'alerte si la variable testée est représentative d'un état d'urgence, le module d'émission d'alerte active déclenchant l'envoi d'au moins un message d'alerte, par un des réseaux.

18. Système d'alerte selon la revendication 17, **caractérisé en ce qu'**il comprend une seconde passerelle de communication avec au moins un second terminal en situation dé mobilité, par un troisième réseau de communication,
le module d'évaluation évaluant la première variable d'alerte et au moins une seconde variable d'alerte associée au second terminal,
la seconde variable d'alerte évaluée étant réglée dans un état représentatif d'un capteur du second terminal, par un second module (M01, M02, M03) de surveillance associé au contexte,
le second terminal transmettant des données représentatives dé l'état du capteur du second terminal, au second module de surveillance réglant la seconde variable d'alerte évaluée, en fonction de ces données transmises.

19. Système d'alerte selon la revendication 17 ou 18, **caractérisé en ce que** le module d'évaluation ou un des modules associés au contexte est réglé, lorsque le module d'évaluation est dans son état dormant par :
- une requête de paramétrage manuel, provenant d'une interface utilisateur du premier terminal (Ter), ou
- une commande de paramétrage automatique produite par le module d'apprentissage, ou
- une requête de paramétrage à distance provenant d'un serveur de paramétrage extérieur à la plateforme.

20. Système d'alerte selon l'une des revendications 17 à 18, **caractérisé en ce qu'**il comprend une bibliothèque de modules d'évaluation, de surveillance ou d'émission d'alerte dédiés des activités déterminées, la bibliothèque étant enrichie par des modules d'évaluation, de surveillance ou d'émission d'alerte sauvegardés chacun avec au moins une donnée d'initialisation représentative du contexte d'utilisation lors de la sauvegarde.

21. Système d'alerte selon la revendication 20, **caractérisé en ce que** la donnée d'initialisation représentative du contexte d'utilisation lors de la sauvegarde est une variable d'alerte.

22. Système d'alerte selon l'une des revendications 17 à 21, **caractérisé en ce que** le serveur (SAL) d'alertes, comprenant au moins une session d'alerte supplémentaire, communique avec un serveurs (SER) central commandant un réglage de chaque session en fonction d'un résultat: d'un examen des séquences d'événements informatiques stockées par chaque module d'apprentissage.

23. Système d'alerte selon l'une des revendications 17 à 22, **caractérise en ce que** la session comprend une pluralité de modules d'évaluation, correspondant chacun à un scénario d'évaluation et associés chacun à au moins un module de surveillance d'au moins une variable d'alerte évaluée et à au moins un module d'émission d'alerte.

## Patentansprüche

1. Alarmverfahren, ausgeführt durch eine Sicherheitsplattform in einem ersten Netzwerk (4), umfassend zumindest eine erste Kommunikationsschnittstelle (Gat) mit mindestens einem ersten mobilen Terminal (Ter), durch ein zweites Telekommunikationsnetzwerk, **dadurch gekennzeichnet, dass** es zumindest Folgendes umfasst:
- einen Schritt der Einrichtung einer Kommunikation zwischen dem ersten Terminal (Ter) und der Sicherheitsplattform (4), umfassend das Senden von repräsentativen Daten eines bestimmten Nutzungskontextes durch den ersten Terminal, umfassend zumindest repräsentative Daten mindestens eines Zustands eines Sensors des ersten Terminals,
- einen Schritt des Initialisierens mindestens einer Alarmsitzung (100) der Plattform, welche in Abhängigkeit von dem Benutzungskontext initialisiert wird, wobei die Alarmsitzung mindestens ein Auswertemodul (C102) umfasst, welches zumindest eine erste Alarmvariable im Zusammenhang mit dem ersten Terminal auswertet,
- einen Schritt des Initialisierens eines ersten Überwachungsmoduls der Plattform, aufgebaut im Zusammenhang mit dem Kontext, wobei das erste Überwachungsmodul die erste Alarmvariable regelt, welche in einem für den Zustand des Sensors des ersten Terminals repräsentativen Zustand ausgewertet wurde,
- einen Schritt des Initialisierens mindestens eines Alarmausgabemoduls (102) in Verbindung mit dem Kontext, welches in Abhängigkeit des Auswertemoduls betätigt wird und bei seiner Aktivierung zumindest das Senden einer Alarmnachricht durch eines der Netzwerke an einen Server (Ser) des Netzwerkes auslöst,
- einen Schritt des Aktivierens der Alarmsitzung und deren Auswertemoduls (C102), weiches mitwirkend mit der Speicherung durch ein Lehrmodul (106), der Abfolgen von Computerereignissen, die die Zustände der Auswertemodule repräsentieren, der Alarmüberwachung und Alarmausgabe, in Phasenübereinstimmung mit den Zuständen der mindestens einen ersten Alarmvariable,
- einen Schritt des Sendens von Einstellungsdaten der ersten ausgewerteten Alarmvariablen, durch den ersten Terminal, der ein erstes Programm zum Senden der Daten ausführt,
- einen Schritt der Aktivierung des Alarmausgabemoduls, wenn das Auswertemodul einen Notzustand feststellt, wobei die erste Alarmvariable in einem für einen Notzustand repräsentativen Zustand eingestellt wird.

2. Alarmverfahren nach Anspruch 1, **dadurch gekennzeichnet, dass** es zumindest Folgendes umfasst:
- einen Schritt der Einrichtung einer Kommunikation zwischen der Sicherheitsplattform (4) und mindestens einem mobilen zweiten Terminal (Ter), der durch ein drittes Netzwerk mit einer zweiten Schnittstelle der Plattform (4) kommuniziert, wobei dieser Schritt begleitet wird von dem Schritt der Einrichtung der Kommunikation zwischen dem ersten Terminal und der Plattform,
- einen Schritt des Verbindens der Alarmsitzung (100) und ihres Auswertemoduls (C102) mit dem zweiten Terminal nach dem Schritt des Initialisierens der Alarmsitzung (100), wobei das Auswertemodul die erste Alarmvariable und zumindest eine mit dem zweiten Terminal verbundene zweite Alarmvariable auswertet,
- einen Schritt des kontextbezogenen Initialisierens eines zweiten Überwachungsmoduls vor dem Schritt des Aktivierens der Alarmsitzung und ihres Auswertemoduls, wobei das zweite Überwachungsmodul die zweite Alarmvariable regelt, die in einem Zustand ausgewertet wurde, der den Zustand eines Sensors des zweiten Terminals repräsentiert,
- einen Schritt des Sendens von Einstellungsdaten der zweiten ausgewerteten Alarmvariablen durch den zweiten Terminal, der nach dem Schritt des Aktivierens der Alarmsitzung und ihres Auswertemoduls ein zweites Programm zum Senden von Daten ausführt.

3. Alarmverfahren nach Anspruch 2, **dadurch gekennzeichnet, dass** auf den Schritt (ETP211) der Aktivierung des Auswertemoduls ein Schritt der Übertragung von der Plattform (4) zu dem ersten bzw. zweiten Terminal (Ter) des ersten bzw. zweiten Programms zum Senden von Daten oder eines Updates des ersten bzw. zweiten Programms zum Senden von Daten folgt.

4. Alarmverfahren nach einem der Ansprüche 1 - 3, **dadurch gekennzeichnet, dass** der Schritt der Einrichtung der Kommunikation zwischen dem ersten Terminal (Ter) und der Sicherheitsplattform (4) das Senden einer Eingabe für eine Anfrage zur Erstellung der Alarmsitzung (100) umfassend die repräsentativen Daten des Kontextes umfasst, und dass der Schritt des Initialisierens einer Alarmsitzung (100) und ihres Aktivierungsmoduls, der Schritt der Einrichtung des Überwachungsmoduls oder der Schritt der Einrichtung des Alarmausgabemoduls in Abhängigkeit eines der mit Einrichtungsdaten aus Modulen einer Bibliothek verglichenen repräsentativen kontextbezogenen Datensatzes verwirklicht wird.

5. Alarmverfahren nach den vorangegangenen Ansprüchen, **dadurch gekennzeichnet, dass** eine Alarmvariable eine binäre Variable oder eine Variable, die eine ganze Zahl oder eine reelle Zahl oder eine Tabelle von ganzen und reellen Zahlen, welche als Eingabewert einer Funktion zur Auswertung eines Alarmniveaus benutzt werden, repräsentiert, ist.

6. Alarmverfahren nach Anspruch 4, **dadurch gekennzeichnet, dass** die für den Kontext repräsentative Angabe eine für den Zustand eines der Sensoren repräsentative Alarmvariable ist.

7. Alarmverfahren nach den Ansprüchen 4 - 6, **dadurch gekennzeichnet, dass** es einen Schritt der Archivierung des Auswertemoduls, des Überwachungsmoduls bzw. des Alarmausgabemoduls (102) umfasst, umfassend die Speicherung von Daten, die repräsentativ sind für das Auswertemodul, das Überwachungsmodul bzw. das Alarmausgabemodul, in Verbindung mit für den Kontext repräsentativen Daten.

8. Alarmverfahren nach einem der Ansprüche 1 - 7, **dadurch gekennzeichnet, dass** auf den Schritt der Einrichtung eines der Auswertemodule, der Überwachungsmodule oder der Alarmausgabemodule ein Schritt des Einstellens dieses Moduls folgt, in Abhängigkeit von:
- einer manuellen Parametereingabe von dem ersten Terminal (Ter) und Eintritt in den ersten Terminal über eine Benutzeroberfläche, oder
- eine Fernanfrage zur Parametrisierung von einem Parametrisierungsserver an die Plattform,
- einer automatischen Parameterbedienung erzeugt durch das Lehrmodul.

9. Alarmverfahren nach Anspruch 8, **dadurch gekennzeichnet, dass** die automatische Parameterbedienung durch das Lehrmodul erzeugt wird, in Abhängigkeit von:
- Abfolgen von Programmereignissen, die durch das Lehrmodul geprüft werden, oder
- einer Annullierung des Notzustandes, eingegeben durch eine Benutzeroberfläche des ersten Terminals.

10. Alarmverfahren nach Anspruch 8 oder 9, **dadurch gekennzeichnet, dass** der Schritt des Einstellens des Auswertemoduls Folgendes umfasst:
- eine Auswahl eines Auswerteprogramms in einer Bibliothek an Programmen, oder
- Parametrisierung des gewählten Auswerteprogramms, oder
- eine Verbindung eines oder mehrerer Alarmausgabemodule, welche in Abhängigkeit von der Auswertung betätigt werden, oder
- eine Einstellung einer oder mehrerer Referenzen der Alarmvariablen, die bei Eingabe eines Auswerteprogrammes ausgelesen werden.

11. Alarmverfahren nach einem der Ansprüche 8 - 10, **dadurch gekennzeichnet, dass** der Schritt des Einstellens des Überwachungsmoduls Folgendes umfasst:
- ein Einstellen einer Referenz eines überwachten Sensors, oder
- Auswahl einer vorläufigen Behandlungsfunktion, welche die Alarmvariable einstellt, oder
- eine Parametrisierung der Funktion der vorläufigen Behandlung, oder
- ein Einstellen einer Verzögerungsdauer einer Alarmauslösung.

12. Alarmverfahren nach einem der Ansprüche 8 - 11, **dadurch gekennzeichnet, dass** der Schritt des Einstellens des Alarmausgabemoduls (102) Folgendes umfasst:
- eine Wahl eines Alarmnachrichtentyps, oder
- ein Einstellen eines Inhalts der Alarmnachricht, oder
- ein Einstellen mindestens einer Alarmreferenzvariablen (V01, V02, V03) oder einer Abfolge von Programmereignissen eingegeben in den Zusammenhang der gesendeten Alarmnachricht bei der Aktivierung des Alarmausgabemoduls, oder
- ein Einstellen eines Alarmsignalziels, oder
- ein Einstellen von Freigabe- oder Ausgabeparametern eines Alarmzustands.

13. Alarmverfahren nach einem der Ansprüche 8 - 12, **dadurch gekennzeichnet, dass** vor dem Aktivierungsabschnitt des Auswertemoduls der dem Kontext entsprechenden Sitzung eine Vorstufe der Einstellung zumindest eines der Auswertemodule, der Überwachungsmodule oder der Alarmausgabemodule erfolgt, wobei das Einstellen automatisch durch das Lehrmodul oder manuell über die Benutzerschnittstelle des ersten Terminals erfolgt.

14. Alarmverfahren nach einem der Ansprüche 8 - 13, **dadurch gekennzeichnet, dass** auf den Schritt der Aktivierung des Alarmausgabemoduls zumindest Folgendes folgt:
- ein Schritt des Deaktivierens des Auswertemoduls (C102) der dem Kontext entsprechenden Sitzung,
- ein Schritt des automatischen Einstellen des Auswertemoduls oder eines der mit dem Kontext verbundenen Module durch das Lehrmodul (106),
- einen neuen Schritt der Aktivierung des Auswertemoduls (C102).

15. Alarmverfahren nach Anspruch 14, **dadurch gekennzeichnet, dass** vor dem Schritt der Deaktivierung des Auswertemoduls zumindest Folgendes erfolgt:
- ein Schritt des Sendens einer Warnnachricht über die Benutzeroberfläche des ersten Terminals,
- ein Schritt des Wartens auf eine Annulierungseingabe des Notzustands, eingegeben durch die Benutzeroberfläche,
- ein Schritt des Empfangens der Annulierungseingabe, gefolgt von dem Schritt des Deaktivierung des Auswertemoduls (C102).

16. Alarmverfahren nach einem der Ansprüche 1 - 15, **dadurch gekennzeichnet, dass** das Auswertemodul zumindest Folgendes ausführt:
- einen Verzögerungsschritt vor der Freigabe des Notzustands, der beim Überschreiten einer parametrisierbaren Schwelle beginnt durch die oder eine der ausgewerteten Variablen, wobei das Ende der Verzögerung den Notzustand oder die Verzögerung freigibt, welche im Fall eines Abfalls der ausgewerteten Variablen unter die Schwelle unterbrochen wird.

17. Alarmsystem umfassend eine Plattform in einem ersten Netzwerk, ausgestattet mit zumindest einer ersten Kommunikationsschnittstelle mit zumindest einem ersten mobilen Terminal (Ter) durch ein zweites Telekommunikationsnetzwerk, wobei ein Alarmserver Behandlungsmittel und Speichermittel umfasst, die angebracht sind, um zumindest über das erste Gateway mit dem ersten Terminal (Ter) zur Ausgabe oder zum Empfang von Daten zu kommunizieren,
**dadurch gekennzeichnet, dass** die mit den Speichermitteln verbundenen Behandlungsmittel angebracht sind, um zumindest Folgendes zu verwirklichen:
eine Alarmsitzung (100), welche in Abhängigkeit von einem Benutzungskontext initialisiert wurde, der zumindest für einen Zustand mindestens eines Servers des ersten Terminals repräsentative Daten umfasst, wobei die Alarmsitzung zumindest ein Auswertemodul (C102, C1021) umfasst, welches in einem aktiven Zustand oder Ruhezustand betätigt wird und zumindest eine erste mit dem ersten Terminal verknüpfte Alarmvariable auswertet, wobei die Alarmsitzung die Einstellung eines Lehrmoduls (106) betätigt, welches die Abfolge von Computerereignissen, welche für die Zustände der Überwachungsmodule, der Auswertemodule und der Alarmausgabemodule in Phasenübereinstimmung mit den Zuständen (V01, V02, V03) der zumindest einen ersten Alarmvariablen repräsentativ sind, speichert,
wobei die erste ausgewertete Alarmvariable in einem Zustand eingestellt wird, der repräsentativ ist für den Sensor des ersten Terminals durch ein erstes Überwachungsmodul (M01, M02, M03), welches in Abhängigkeit von dem Kontext initialisiert wurde,
wobei der erste Terminal Daten, die repräsentativ sind für den Zustand des Sensors des ersten Terminals, an das erste Überwachungsmodul überträgt, welches die erste ausgewertete Alarmvariable in Abhängigkeit von diesen übertragenen Daten einstellt,
wobei das Auswertemodul in seinem aktiven Zustand die Aktivierung des Alarmausgabemoduls betätigt, wenn die getestete Variable für einen Notzustand repräsentativ ist, wobei das aktivierte Alarmausgabemodul das Senden mindestens einer Alarmnachricht über eines der Netzwerke auslöst.

18. Alarmsystem nach Anspruch 17, **dadurch gekennzeichnet, dass** es eine zweite Kommunikationsschnittstelle mit zumindest einem zweiten mobilen Terminal über ein drittes Kommunikationsnetzwerk umfasst,
wobei das Auswertemodul die erste Alarmvariable und zumindest eine in Verbindung mit dem zweiten Terminal stehende zweite Alarmvariable auswertet,
wobei die zweite ausgewertete Alarmvariable in einem Zustand, der repräsentativ ist für einen Sensor des zweiten Terminals, durch ein zweites kontextbezogenes Überwachungsmodul (M01, M02, M03) eingestellt wird,
wobei der zweite Terminal die Daten, die repräsentativ sind für den Zustand des Sensors des zweiten Terminals, an das zweite Überwachungsmodul übermittelt, welches die zweite ausgewertete Alarmvariable in Abhängigkeit von diesen übermittelten Daten einstellt.

19. Alarmsystem nach Anspruch 17 oder 18, **dadurch gekennzeichnet, dass** das Auswertemodul oder eines der kontextbezogenen Module eingestellt wird, während sich das Auswertemodul in seinem Ruhezustand befindet, durch:
- eine Eingabe einer manuellen Parametrisierung ausgehend von einer Benutzeroberfläche des ersten Terminals (Ter), oder
- eine Steuerung der automatischen Parametrisierung, die durch das Lehrmodul erzeugt wird, oder
- eine Fernanfrage zur Parametrisierung ausgehend von einem bezüglich der Plattform externen Parametrisierungsserver.

20. Alarmsystem nach einem der Ansprüche 17 - 18, **dadurch gekennzeichnet, dass** es eine Bibliothek an Auswertemodulen, an Überwachungsrnodulen oder Alarmausgabemodulen zu bestimmten Aktivitäten umfasst, wobei die Bibliothek erweitert wird durch Auswertemodule, Überwachungsmodule oder Alarmausgabemodule, die jeweils mit zumindest einer Initialisierungsangabe gespeichert werden, die repräsentativ sind für den Benutzungskontext bei der Speicherung.

21. Alarmsystem nach Anspruch 20, **dadurch gekennzeichnet, dass** die Initialisierungsdaten, welche repräsentativ sind für den Benutzungskontext bei der Speicherung, eine Alarmvariable darstellen.

22. Alarmsystem nach einem der Ansprüche 17 - 21, **dadurch gekennzeichnet, dass** der Alarmserver (SAL), welcher zumindest eine zusätzliche Alarmsitzung umfasst, mit einem zentralen Server (SER) in Kommunikation steht, welcher ein Einstellen jeder Sitzung in Abhängigkeit eines Ergebnisses des Prüfens der Abfolge an Computerereignissen, welche durch jedes Lehrmodul gespeichert werden, steuert.

23. Alarmsystem nach einem der Ansprüche 17 - 22, **dadurch gekennzeichnet, dass** die Sitzung eine Vielzahl von Auswertemodulen umfasst, wobei jedes einem Auswerteschema entspricht und wobei jedes mit zumindest einem Überwachungsmodul zumindest einer ausgewerteten Alarmvariablen und zumindest einem Alarmausgabemodul in Verbindung steht.

## Claims

1. Alarm method executed by a security platform (4) in a first network, comprising at least one first gateway (Gat) for communication with at least one first terminal (Ter) in a mobile environment, by a second telecommunications network, **characterised in that** it comprises at least:
- a step of establishment of a communication between the first terminal (Ter) and the security platform (4), comprising the transmission, by the first terminal, of data representative of a specific context of use comprising at least data representative of at least one state of at least one sensor of the first terminal,
- a step of initialisation of at least one alarm session (100) of the platform, initialised as a function of the context of use, the alarm session comprising at least one evaluation module (C102) evaluating at least one first alarm variable associated with the first terminal,
- a step of initialisation of a first monitoring module of the platform, initialised as a function of the context, the first monitoring module setting the first alarm variable evaluated in a state representative of the state of a sensor of the first terminal,
- a step of initialisation of at least one alarm transmission module (102), associated with the context, controlled as a function of the evaluation module and triggering, during its activation, at least the transmission of an alarm message, by one of the networks, towards a server (Ser) of the network,
- a step of activation of the alarm session and the evaluation module (C102) thereof, carried out concomitantly with the storage, by a learning module (106), of sequences of computer-based events representative of the states of the evaluation, monitoring and alarm transmission modules, phase matched with the states of at least one first alarm variable,
- a step of transmission of data for setting of the first alarm variable evaluated, by the first terminal executing a first data transmission program,
- a step of activation of the alarm transmission module when the evaluation module detects a state of emergency, the first alarm variable being set to a state representative of a state of emergency.

2. Alarm method according to claim 1, **characterised in that** it comprises at least:
- a step of establishment of a communication between the security platform (4) and at least one second terminal (Ter) in a mobile environment communicating by a third network with a second gateway of the platform, this step being concomitant with the step of establishment of the communication between the first terminal and the platform,
- a step of association of the alarm session (100) and the evaluation module (Ce102) thereof with the second terminal, following the step of initialisation of the alarm session (100), the evaluation module evaluating the first alarm variable and at least one second alarm variable associated with the second terminal,
- a step of initialisation of a second monitoring module associated with the context, preceding the step of activation of the alarm session and the evaluation module thereof, the second monitoring module setting the second alarm variable evaluated in a state representative of the state of a sensor of the second terminal,
- a step of transmission of data for setting of the second alarm variable evaluated, by the second terminal executing a second data transmission program, following the step of activation of the alarm session and the evaluation module thereof.

3. Alarm method according to claim 2, **characterised in that** the step (ETP211) of activation of the evaluation module is followed by a step of transmission, from the platform, (4) to the first and respectively to the second terminal (Ter), of the first and respectively of the second data transmission program or of an update of the first and respectively of the second data transmission program.

4. Alarm method according to one of claims 1 to 3, **characterised in that** the step of establishment of the communication between the first terminal (Ter) and the security platform (4) comprises the transmission, by the first terminal, of a request for creation of the session (100), comprising the data representative of the context,
and **in that** the step of initialisation of the alarm session (100) and of the evaluation module thereof, the step of initialisation of the monitoring module or the step of initialisation of the alarm transmission module is carried as a function of at least one of the data representative of the context, compared with initialisation data associated with modules of a library.

5. Alarm method according to the preceding claims, **characterised in that** an alarm variable is a binary variable or a variable representative of an integer or of a real number or a table of integers or of real numbers, used as input of a function evaluating an alarm level.

6. Alarm method according to claim 4, **characterised in that** the data item representative of the context is an alarm variable representative of the state of one of the sensors.

7. Alarm method according to claims 4 to 6, **characterised in that** it comprises a step of archiving of the evaluation module, of the monitoring module or respectively of the alarm transmission module (102) comprising the storage of data representative of the evaluation module, of the monitoring module or respectively of the alarm transmission module, associated with data representative of the context.

8. Alarm method according to one of claims 1 to 7, **characterised in that** the step of initialisation of one of the modules for evaluation, monitoring or alarm transmission is followed by a step of setting of this module, as a function of:
- a request for manual parameterisation coming from the first terminal (Ter) and input by a user interface of the first terminal, or
- a request for remote parameterisation coming from a parameterisation server external to the platform,
- an automatic parameterisation command produced by the learning module.

9. Alarm method according to claim 8, **characterised in that** the automatic parameterisation command is produced by the learning module as a function of:
- sequences of computer-based events examined by the learning module, or
- a cancellation of the state of emergency input by the user interface of the first terminal.

10. Alarm method according to claim 8 or 9, **characterised in that** the step of setting of the evaluation module comprises:
- choice of an evaluation program in a library of programs, or
- parameterisation of the evaluation program chosen, or
- association of one or more alarm transmission modules controlled as a function of the evaluation, or
- setting of one or several references of alarm variables read at the input of the evaluation program.

11. Method according to one of claims 8 to 10, **characterised in that** the step of setting of the monitoring module comprises:
- setting of a reference of a monitored sensor, or
- choice of a preliminary processing function setting the alarm variable, or
- parameterisation of the position of dealing with preliminary, or
- setting of a timing controller for triggering an alarm.

12. Method according to one of claims 8 to 11, **characterised in that** the step of setting of the alarm transmission module (102) comprises:
- choice of a type of alarm message, or
- setting of the content of the alarm message, or
- setting of at least one alarm variable reference (V01, V02, V03) or of a sequence of computer-based events inserted into the content of the alarm message sent, during the activation of the alarm transmission module, or
- setting of the destination of the alarm message, or
- setting of parameters for unlocking or for exit from an alarm state.

13. Alarm method according to one of claims 8 to 12, **characterised in that** the step of activation of the evaluation module of the session corresponding to the context is preceded by a prior step of setting of at least one of the modules for evaluation, monitoring or alarm transmission, the setting being carried out automatically by the learning module or manually by the user interface of the first terminal.

14. Method according to one of claims 8 to 13, **characterised in that** the step of activation of the alarm transmission module (102) is followed by at least:
- a step of deactivation of the evaluation module (C102) of the session corresponding to the context,
- a step of automatic setting of the evaluation module or of one of the modules associated with the context, by the learning module (106),
- a new step of activation of the evaluation module (C102).

15. Alarm method according to claim 14, **characterised in that** the step of deactivation of the evaluation module is preceded by at least:
- a step of transmission of an alerting message, via the user interface of the first terminal,
- a step of awaiting a request for cancellation of the state of emergency, input by the user interface,
- a step of reception of the request for cancellation followed by the step of deactivation of the evaluation module (C102).

16. Alarm method according to one of claims 1 to 15, **characterised in that** the evaluation module executes at least:
- a step of timing control before validation of the state of emergency, starting with exceeding of a parameterisable threshold, by the evaluated variable or one of the evaluated variables, the end of the timing control validating the state of emergency or the timing control being interrupted in the case of a passage of the evaluated variable below the threshold.

17. Alarm system comprising a platform (4) in a first network, comprising at least one first gateway (Gat) for communication with at least one first terminal (Ter) in a mobile environment, by a second telecommunications network, an alarm server comprising processing means and memory means arranged in such a way as to communicate at least, via the first gateway, with the first terminal (Ter), for the transmission or the reception of data,
**characterised in that** the processing means associated with the memory means are arranged in such a way as to implement at least:
an alarm session (100), initialised as a function of a context of use comprising at least data representative of at least a state of at least one sensor of the first terminal, the alarm session comprising at least one evaluation module (C102, C1021), controlled in an active or dormant state and evaluating at least one first alarm variable associated with the first terminal, the alarm session controlling the setting of a learning module (106) which memorises sequences of computer-based events representative of the states of the modules for monitoring, evaluation and alarm transmission, phase matched with the states (V01, V02, V03) of the at least one first alarm variable,
the first alarm variable evaluated being set in a state representative of a sensor of the first terminal, by a first monitoring module (M01, M02, M03) initialised as a function of the context,
the first terminal transmitting data representative of the state of the sensor of the first terminal to the first monitoring module setting the first alarm variable evaluated, as a function of these transmitted data,
the evaluation module, in its active state, controlling the activation of the alarm transmission module if the tested variable is representative of a state of emergency, the activated alarm transmission module triggering the transmission of at least one alarm message, by one of the networks.

18. Alarm system according to claim 17, **characterised in that** it comprises a second gateway for communication with at least one second terminal in a mobile environment, by a third telecommunications network,
the evaluation module evaluating the first alarm variable and at least one second alarm variable associated with the second terminal,
the second alarm variable evaluated being set in a state representative of a sensor of the second terminal, by a second monitoring module (M01, M02, M03) associated with the context,
the second terminal transmitting data representative of the state of the sensor of the second terminal to the second monitoring module setting the second alarm variable evaluated, as a function of these transmitted data.

19. Alarm system according to claim 17 or 18, **characterised in that** the evaluation module or one of the modules associated with the context is set, when the evaluation module is in its dormant state, by:
- a request for manual parameterisatian coming from a user interface of the first terminal (Ter), or
- an automatic parameterisation command produced by the learning module, or
- a request for remote parameterisation coming from a parameterisation server external to the platform.

20. Alarm system according to one of claims 17 to 18, **characterised in that** it comprises a library of modules for evaluation, monitoring or alarm transmission dedicated to specific activities, the library being enhanced by modules for evaluation, monitoring or alarm transmission each backed up with at least one initialisation data item representative of the context of use during the backup.

21. Alarm system according to claim 20, **characterised in that** the initialisation data item representative of the context of use during the backup is an alarm variable.

22. Alarm system according to one of claims 17 to 21, **characterised in that** the alarm server (SAL), comprising at least one supplementary alarm session, communicates with a central server (SER) controlling a setting of each session as a function of a result of an examination of the sequences of computer-based events stored by each learning module.

23. Alarm system according to one of claims 17 to 22, **characterised in that** the session comprises a plurality of evaluation modules, each corresponding to an evaluation scenario and each associated with at least one monitoring module of at least one alarm variable evaluated and with at least one alarm transmission module.
